# EUROPÄISCHE PATENTSCHRIFT

(11) **EP 2 540 532 B1**
(45) Veröffentlichungstag und Bekanntmachung des Hinweises auf die Patenterteilung: **06.05.2015**
(21) Anmeldenummer: 12401114.9
(22) Anmeldetag: 09.06.2012
(51) Int. Cl.: B60D 1/06, B60R 9/06

(54) **Kupplungsvorrichtung für einen Lastenträger**
Coupling device for a load bearing device
Dispositif de couplage pour un support de charge

(30) Priorität: 28.06.2011 DE 102011108656
(43) Veröffentlichungstag der Anmeldung: 02.01.2013
(73) Patentinhaber: I-Racks GmbH, 88284 Wolpertswende (DE)
(72) Erfinder: Ziola, Stefan, 88284 Wolpertswende (DE)
(74) Vertreter: Patentanwälte Hosenthien-Held und Dr. Held

(56) Entgegenhaltungen:
- EP-A1- 1 138 529
- EP-A2- 1 170 178
- DE-U1- 9 113 527
- DE-U1- 9 404 236
- DE-U1-202006 012 073
- FR-A1- 2 684 056
- NL-C- 2 002 898

## Beschreibung

Die Erfindung betrifft eine Kupplungsvorrichtung für einen Lastenträger, insbesondere für einen Heckträger, zur Befestigung des Lastenträgers an einer Anhängerkupplung eines Kraftfahrzeugs.

Die US 2 580 770 A1 zeigt eine Kupplungsvorrichtung für einen Anhänger, bei der die Verspannung einer Kugelkalotte mit der Kugelkopfkupplung über ein Viergelenk erfolgt. Hierbei ist ein Hebel vorgesehen, welcher in geöffneter Stellung nach oben zeigt, in geschlossener Stellung im Wesentlichen parallel oberhalb der Anhängerachse verläuft. Bei einer derartigen Kupplungsvorrichtung ist eine Relativbewegung zwischen Kugelkalotte und Kugelkopfkupplung im verspannten Zustand möglich, um den Anhänger manövrieren zu können.

Eine andere Anhängerkupplung für Anhänger ist aus der CH 219 540 A bekannt. Hierbei ist ein Kniehebelverschluss zum Spannen vorgesehen, wobei auch in diesem Fall eine Relativbewegung zwischen Kugelkalotte und Kugelkopfkupplung im verspannten Zustand möglich ist.

Eine weitere Kupplungsvorrichtung für Anhänger ist aus der US 2 580 770 A bekannt.

Aus der DE 195 40 041 A1 ist eine Vorrichtung zur Befestigung eines Lastenträgers, beispielsweise eines Fahrradhalters, auf einer Anhängerkupplung eines Fahrzeugs bekannt. Diese Vorrichtung hat ein Gehäuseteil, welches Hülsen für die Befestigung des Lastenträgers am Gehäuseteil, eine obere Stützfläche für das Zusammenwirken mit der Kugel und eine untere Stützfläche für das Zusammenwirken mit dem Hals der Kugel aufweist. Ferner hat das Gehäuseteil einen in der Höhe zwischen der oberen und der unteren Stützfläche gelegenen Spannteil, der zwischen einer offenen Position zur Montage der Vorrichtung auf und zur Demontage von der Anhängerkupplung und einer Spannposition am Hals oder an der Kugel beweglich ist. Der Spannteil hat eine Öffnung, durch die die Kugel der Anhängerkupplung und eventuell ein Teil von deren Hals bei der Montage/Demontage durchgeführt werden können.

Eine weitere Kupplungsvorrichtung zur Befestigung eines Lastenträgers ist aus der DE 10 2008 009 150 A1 bekannt. Hierbei sind Stützarme vorgesehen, welche den Lastenträger am unteren Bereich des Halses der Anhängerkupplungskugel abstützen. Zum Verspannen ist ein Griff vorgesehen, der in offener Stellung der Kupplungsvorrichtung schräg nach hinten oben und geschlossener Stellung im Wesentlichen parallel zur Horizontalen nach hinten ausgerichtet ist.

Aus der DE 10 2006 013 465 A1 ist eine Kupplungsvorrichtung für einen Lastenträger bekannt, welche eine Kalotte und einen Spannbügel mit einem Brückenteil aufweist. Die Vorrichtung kann auf die Anhängerkupplung aufgesetzt werden und ist in korrekt aufgesetzter Position in einer etwa horizontalen Ebene stabilisiert. Zum Abheben aus dieser stabilisierten Position kann der Lastenträger rückseitig etwas angehoben werden und der Spannbügel mit Hilfe eines Spannhebels über den Kopf angehoben werden. Zur Verspannung wird, ausgehend von der stabilisierten Position, zunächst eine Verrastung zwischen dem Spannhebel und dem Spannbügel durch manuelles Verschwenken einer Klinke gelöst und anschließend durch ein Verschwenken des Spannhebels nach hinten der Spannbügel gegen den Kopf der Anhängerkupplung gespannt. Die Spannbewegung entsteht dabei mit Hilfe einer Exzenterwelle, an deren exzentrischen Endbereichen der Spannhebel fixiert ist. Zum Lösen der Kupplungsvorrichtung muss die Klinke wiederum manuell entriegelt werden. Anschließend kann durch das Rückschwenken des Spannhebels die Verspannung gelöst werden.

Die EP 2 017 131 A2 offenbart einen Lastenträger mit einem zum Tragen einer Last vorgesehenen Ladegestell, das in einer Gebrauchsstellung des Lastenträgers nach hinten vor einen Heckbereich des Kraftfahrzeugs vorsteht und einen in einer Gebrauchsstellung des Lastenträgers im Wesentlichen horizontalen Ladebereich zum Aufladen einer Last bereitstellt, wobei der Lastenträger eine in der Gebrauchsstellung im Wesentlichen vertikale Stütze zum Halten der Last aufweist, und wobei der Lastenträger eine Verriegelungseinrichtung mit mindestens einem Verriegelungselement zum ortsfesten Verriegeln mindestens eines beweglichen Lastenträgerbauteils des Lastenträgers aufweist. Bei dem Lastenträger ist vorgesehen, dass eine Handbetätigungseinrichtung zum Betätigen der Verriegelungseinrichtung an einem oberen, von dem Ladebereich entfernten Endbereich der Stütze angeordnet ist, und dass er mindestens ein Übertragungsglied in Gestalt eines Seilzugs zum Übertragen einer Betätigungsbewegung der Handbetätigungseinrichtung auf das Verriegelungselement aufweist.

Aus der NL 2002898 C ist eine Kupplungsvorrichtung zur Anbringung eines Behälters zum Gepäcktransport an einer Kugel einer Anhängerkupplung bekannt, wobei die Kupplungsvorrichtung einen feststehenden Kupplungsteil, welcher auf einer Seite der Kugel angeordnet ist, und einen fest an einem Hebelarm angebrachten zweiten Kupplungsteil aufweist, welcher auf der gegenüberliegenden Seite der Kugel angeordnet wird. Der Hebelarm ist Teil eines Viergelenks, welches zwei verschwenkbar miteinander verbundene Schwingen aufweist, wobei eine der Schwingen mit einem Ende am Hebelarm, die andere Schwinge mit einem Ende drehbar an einem Gestell angebracht ist, an welchem auch der feststehende Kupplungsteil angeordnet ist. Die beiden Schwingen bilden hierbei eine Art Kniehebel, wobei derselbe zum sicheren Spannen und Verriegeln einen Totpunkt überwinden muss. Hierfür ist eine Querkraft erforderlich, welche seitlich auf die im Totpunkt gestreckt angeordneten Schwingen wirken muss. Zum Lösen der Kupplungsvorrichtung ist eine in entgegengerichteter Richtung wirkende Kraft erforderlich.

Aus der nachveröffentlichten DE 10 2010 036 898 A1 ist ferner ein zusammenklappbarer Lastenträger bekannt, der zwei hochklappbare Stellbereiche hat, auf welche bis zu zwei Fahrräder stellbar sind. Der Lastenträger ist durch eine Basis und eine mit der Basis schwenkbar verbundene Trägeranordnung gebildet. Hierbei dient einer der Trägerrahmen der Bewegung eines Spannbügels über die Kugel der Anhängekupplung, der andere Trägerrahmen dient dem eigentlichen Spannen. Eine entsprechende Ausgestaltung kann im Falle von Fehlbedienungen zu Beschädigungen führen. Insbesondere muss eine vorgegebene Reihenfolge in Bezug auf das Herunterklappen der Trägerrahmen bei der Bedienung eingehalten werden.

Die vorstehenden Kupplungsvorrichtungen lassen noch Wünsche offen. Insbesondere ist soll eine Kupplungsvorrichtung zur Verfügung gestellt werden, die durch eine einzige Handbewegung fest, d.h. nicht mehr verdrehbar, am Kopf der Anhängerkupplung angebracht werden kann.

Der Erfindung liegt daher die Aufgabe zu Grunde, eine Kupplungsvorrichtung zu verbessern.

Diese Aufgabe wird erfindungsgemäß durch eine Kupplungsvorrichtung mit den Merkmalen des Anspruchs 1 gelöst. Vorteilhafte Ausgestaltungen sind Gegenstand der Unteransprüche.

Dadurch, dass das Einschwenken und Spannen des Spannbügels durch eine Schwenkbewegung eines einzigen als Bedienelement dienenden Hebels um eine Schwenkachse erfolgt, und die Schwenkbewegung des Hebels durch ein Viergelenk in die Schwenk- und Spannbewegung des Spannbügels umgesetzt wird, ergibt sich eine einfache Betätigung zum Spannen. Bedienfehler lassen sich vermeiden. Insbesondere dadurch, dass in einem ersten Teilbereich der Bewegung des Spannbügels ein Einschwenken und in einem zweiten Teilbereich, welcher ab einer entsprechenden Anlage des Spannbügels am Kopf der Anhängerkupplung, vorzugsweise etwa mittig in Bezug auf die Höhe des Spannbügels, ein Spannen des Spannbügels erfolgt, kann mit einer einfachen Schwenkbewegung eines einzigen Hebels das Einschwenken und Spannen des Spannbügels erfolgen. Hierbei ist der Aufbau der Kupplungsvorrichtung, welche den Spannbügel samt Viergelenk umfasst, bevorzugt spiegelbildlich in Bezug auf eine Mittelebene angeordnet, das heißt, es sind zwei spiegelbildlich angeordnete Viergelenke auf beiden Seiten des Kopfes der Anhängerkupplung vorgesehen, wobei die beiden Viergelenke in ihren Bewegungen synchronisiert sind.

Durch die Ausgestaltung eines Teils des Viergelenks in Verbindung mit dem Anlagepunkt am Kopf der Anhängerkupplung als Kniehebel lassen sich hohe Spannkräfte realisieren.

Insbesondere bevorzugt ist eine Ausgleichsanordnung für unterschiedliche Kugeldurchmesser des Kopfes der Anhängerkupplung vorgesehen. Diese Ausgleichsvorrichtung kann einen automatischen Ausgleich vorsehen, sie kann alternativ aber auch manuell einstellbar sein.

Bei einem automatischen Ausgleich sieht ein Teilbereich der Schwenkbewegung des Hebels einen Ausgleich für unterschiedliche Kugeldurchmesser des Kopfes der Anhängerkupplung vor, wobei in diesem Teilbereich ein Schwenken des Hebels ohne eine Weiterbewegung des Spannbügels erfolgt. Hierbei ist die gesamte Schwenkbewegung des Hebels in drei Teilbereiche unterteilt, mit einem ersten Teilbereich, in welchem der Spannbügel einschwenkt und in Anlage an den Kopf der Anhängerkupplung gelangt, einem zweiten Teilbereich, in welchem der Ausgleich ohne wesentliches Spannen des Spannbügels erfolgt, und einem dritten Teilbereich, in welchem die Spannbewegung des Spannbügels erfolgt.

Insbesondere bevorzugt ist der Hebel verriegelbar ausgebildet. Hierfür ist bevorzugt eine Verriegelungsvorrichtung zwischen dem Hebel und dem Spannbügel vorgesehen, welche im gespannten Zustand den Hebel formschlüssig am Spannbügel fixiert.

Obwohl im Folgenden als Lastenträger auf sogenannte Heckträger Bezug genommen wird, kann bei Sonderfahrzeugen die Anhängerkupplung auch an einer anderen Seite des Fahrzeugs vorgesehen sein, beispielsweise an der Vorderseite. Selbstverständlich kann der Lastenträger auch hierfür verwendet werden.

Im Folgenden ist die Erfindung anhand zweier Ausführungsbeispiele unter Bezugnahme auf die beiliegende Zeichnung näher erläutert. In der Zeichnung zeigen:
- Fig. 1: eine perspektivische Ansicht des zentralen Bereichs des Lastenträgers gemäß dem ersten Ausführungsbeispiel mit geöffneter Kupplungsvorrichtung,

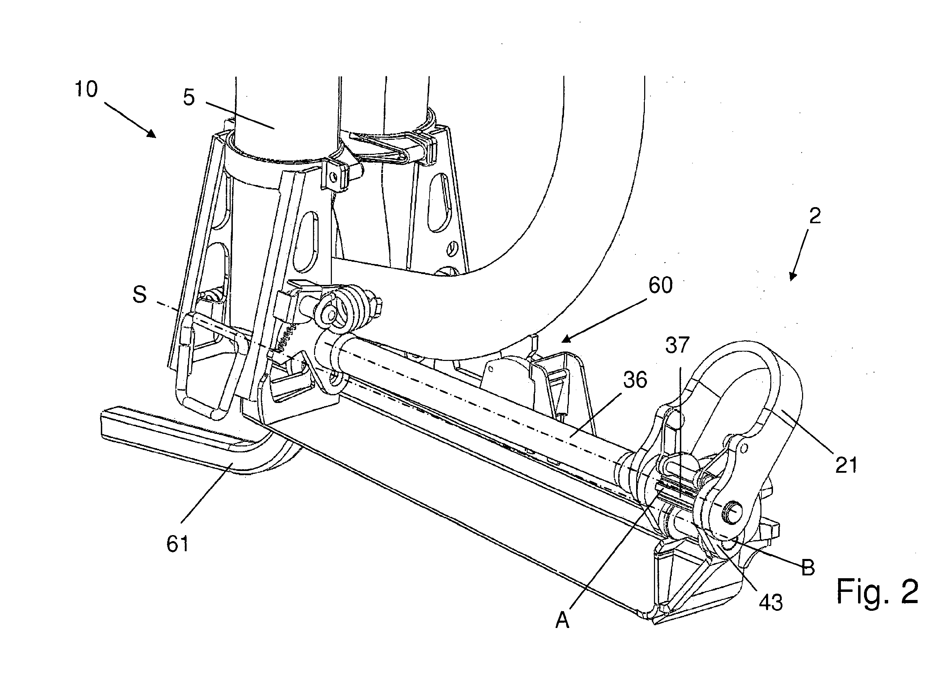

- Fig. 2: eine andere perspektivische Ansicht von Fig. 1,

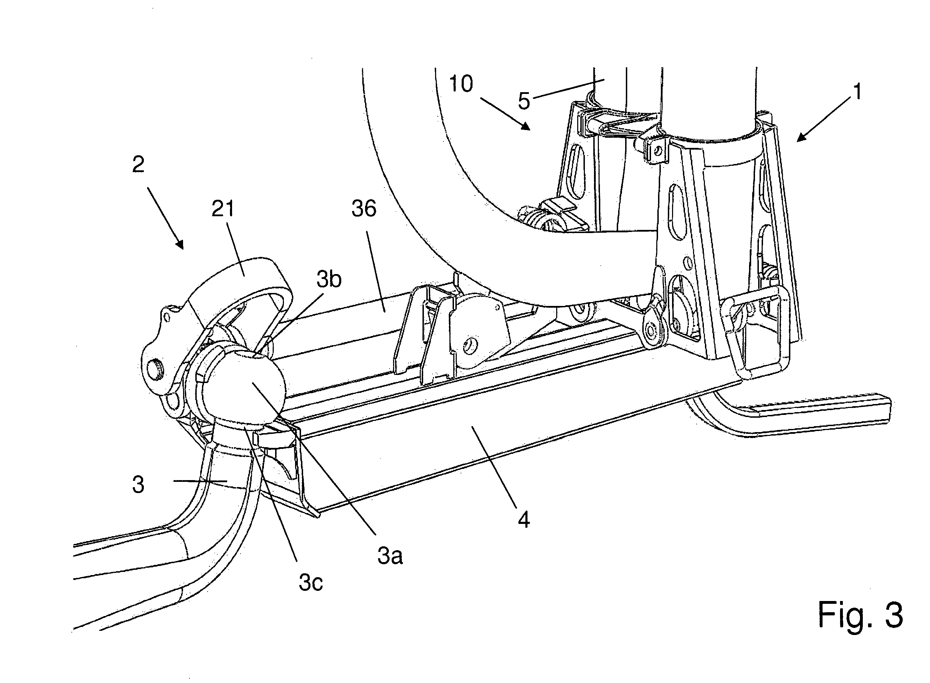

- Fig. 3: eine perspektivische Ansicht des zentralen Bereichs des Lastenträgers in einer auf eine Anhängerkupplung aufgesetzten, stabilisierten Position,

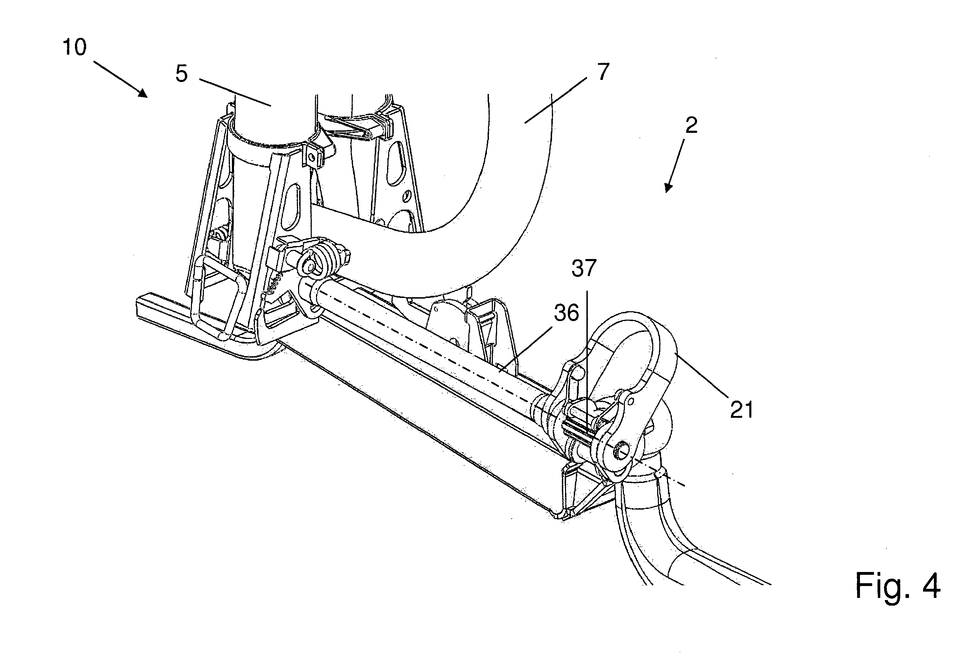

- Fig. 4: eine andere perspektivische Ansicht von Fig. 3,

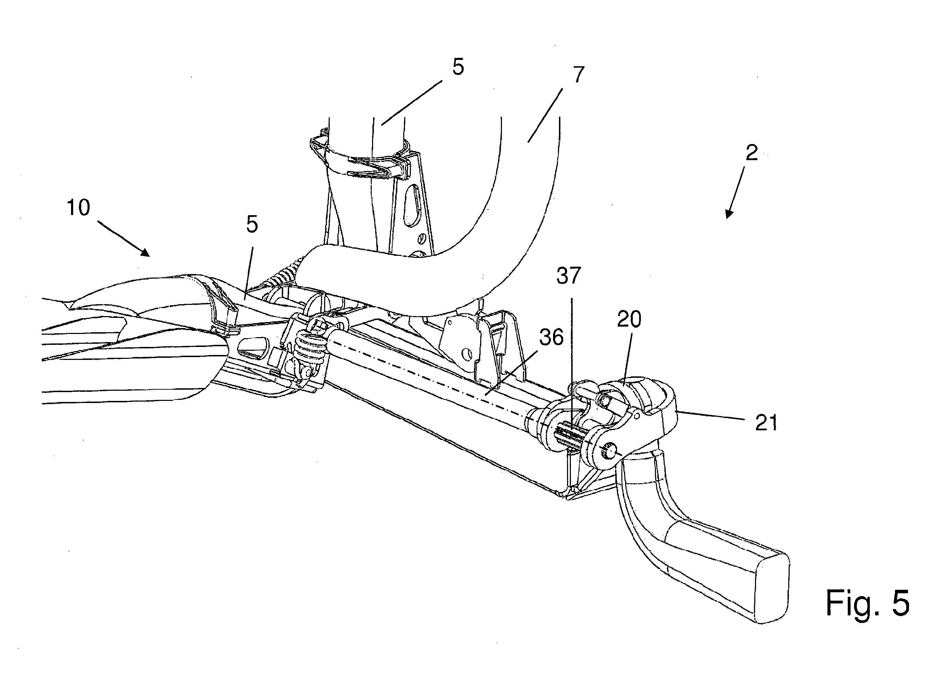

- Fig. 5: eine perspektivische Ansicht zu Beginn des Spannens der Kupplungsvorrichtung bei einer Anhängerkupplung mit einem Durchmesser von 49,5 mm,

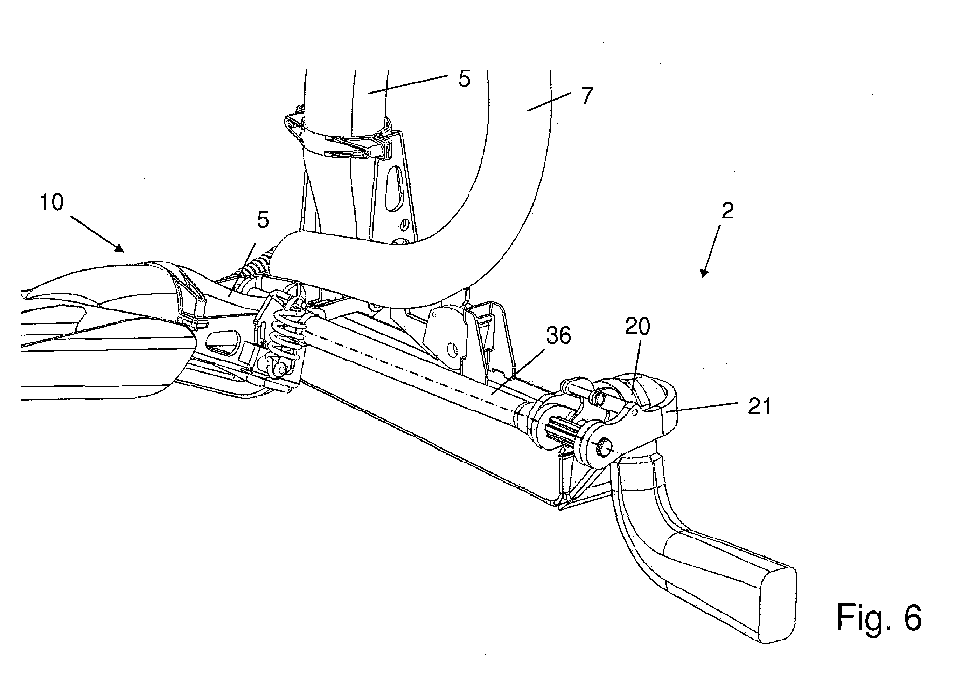

- Fig. 6: eine perspektivische Ansicht zu Beginn des Spannens der Kupplungsvorrichtung bei einer Anhängerkupplung mit einem Durchmesser von 50 mm,

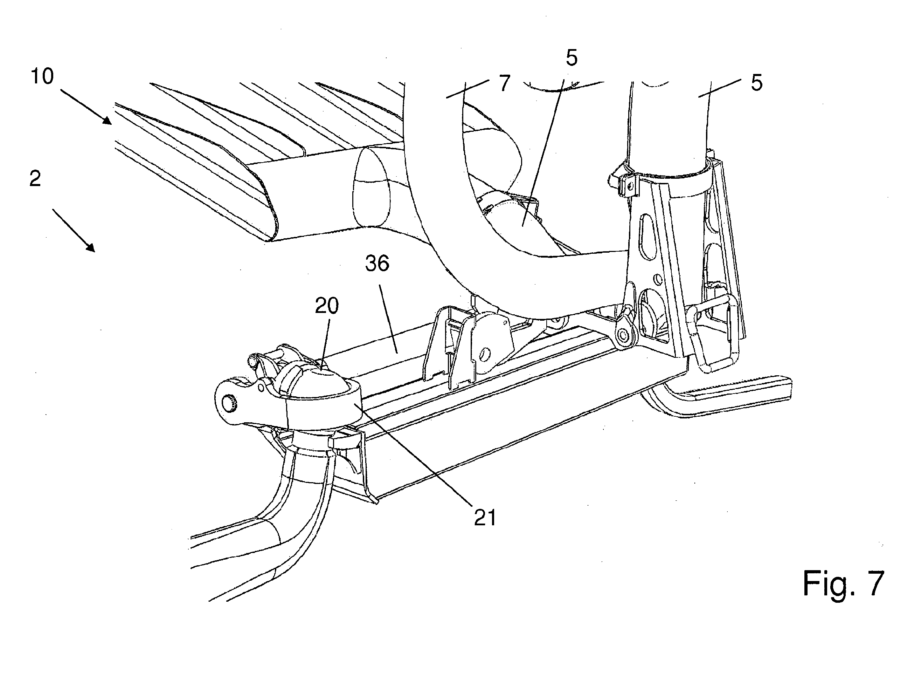

- Fig. 7: eine andere perspektivische Ansicht von Fig. 6,

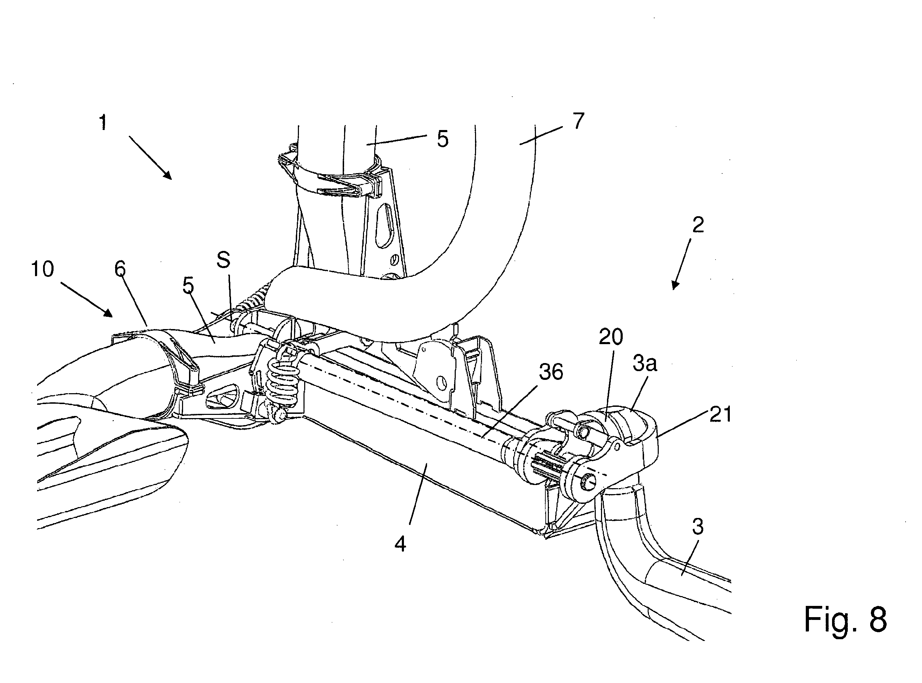

- Fig. 8: eine perspektivische Ansicht des zentralen Bereichs des Lastenträgers im gespannten Zustand der Kupplungsvorrichtung (Durchmesser Kopf 50 mm),

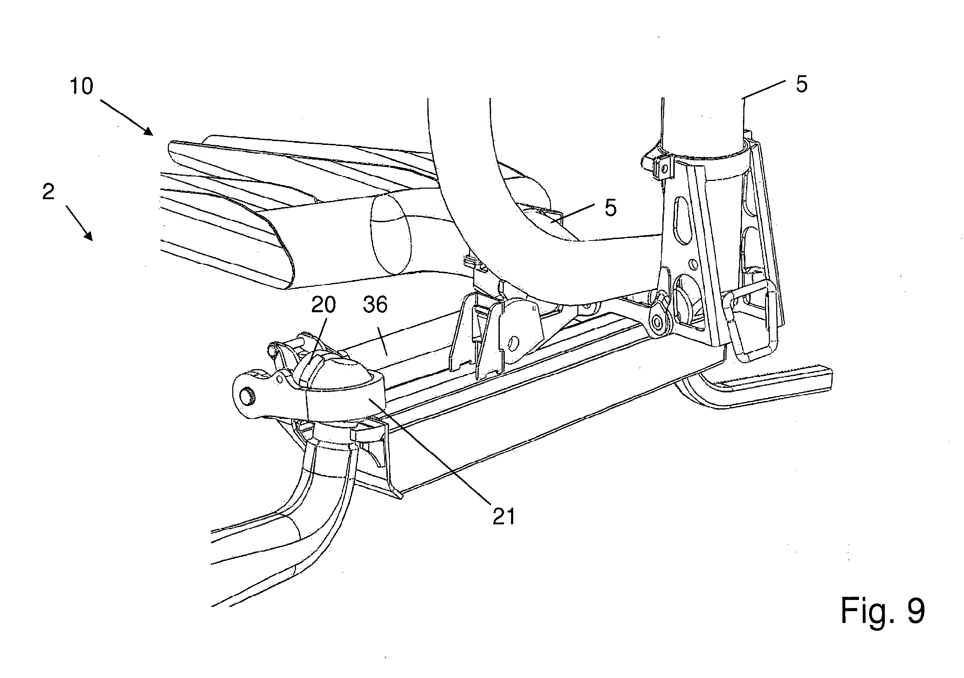

- Fig. 9: eine andere perspektivische Ansicht von Fig. 8,
- Fig. 10: eine teilweise Vorderansicht des Kupplungsbereichs mit geöffnetem Spannbügel,
- Fig. 11: eine teilweise aufgerissene Vorderansicht des Kupplungsbereichs bei Beginn des Spannens (Durchmesser Kopf 49,5 mm),
- Fig. 12: eine teilweise aufgerissene Vorderansicht des Kupplungsbereichs bei Beginn des Spannens (Durchmesser Kopf 50 mm),
- Fig. 13: eine teilweise aufgerissene Vorderansicht des Kupplungsbereichs in gespannter Position,

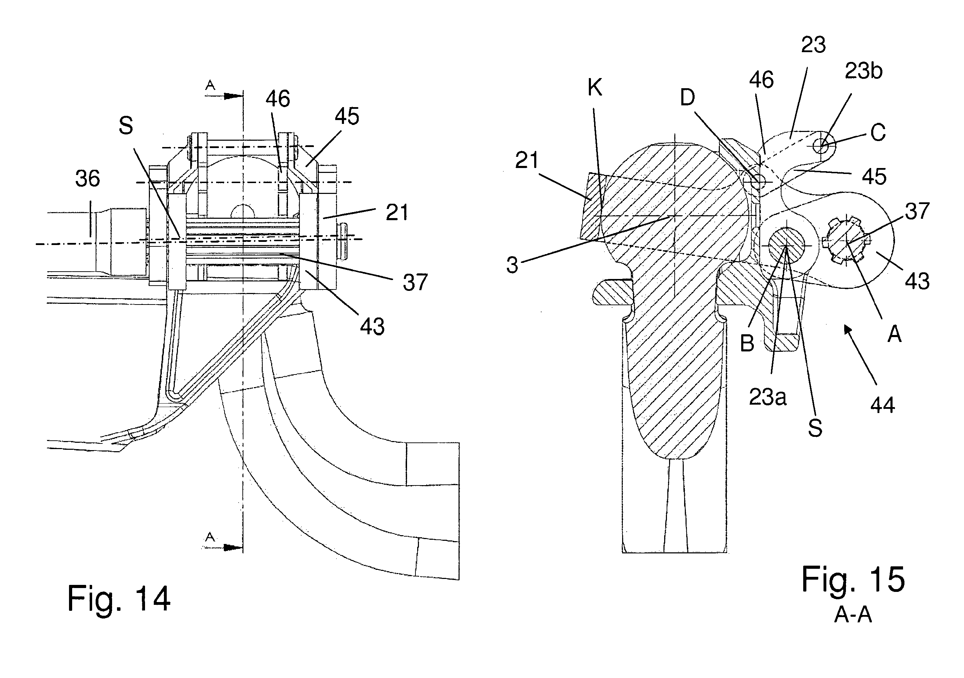

- Fig. 14: eine Seitenansicht der Anhängerkupplung mit Kupplungsbereich,
- Fig. 15: einen Schnitt entlang Linie A-A in Fig. 13,
- Fig. 16: einen Schnitt durch den Kugeldurchmesser-Ausgleich in geöffneter Position,
- Fig. 17: einen Schnitt durch den Kugeldurchmesser-Ausgleich vor Beginn des Zahneingriffs,

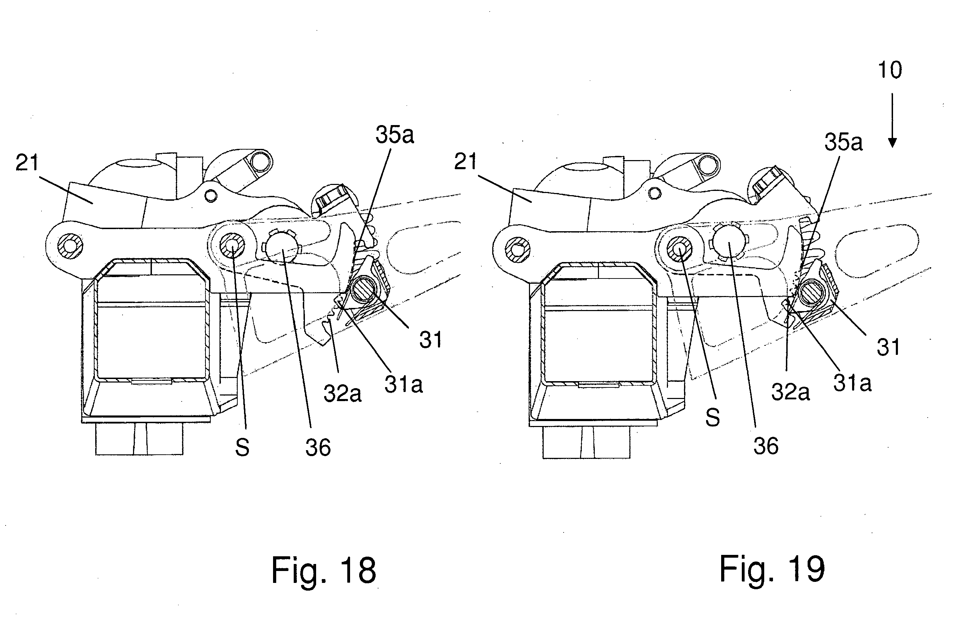

- Fig. 18: einen Schnitt durch den Kugeldurchmesser-Ausgleich bei Beginn des Spannens (Durchmesser Kopf 49,5 mm),
- Fig. 19: einen Schnitt durch den Kugeldurchmesser-Ausgleich bei Beginn des Spannens (Durchmesser Kopf 50 mm),

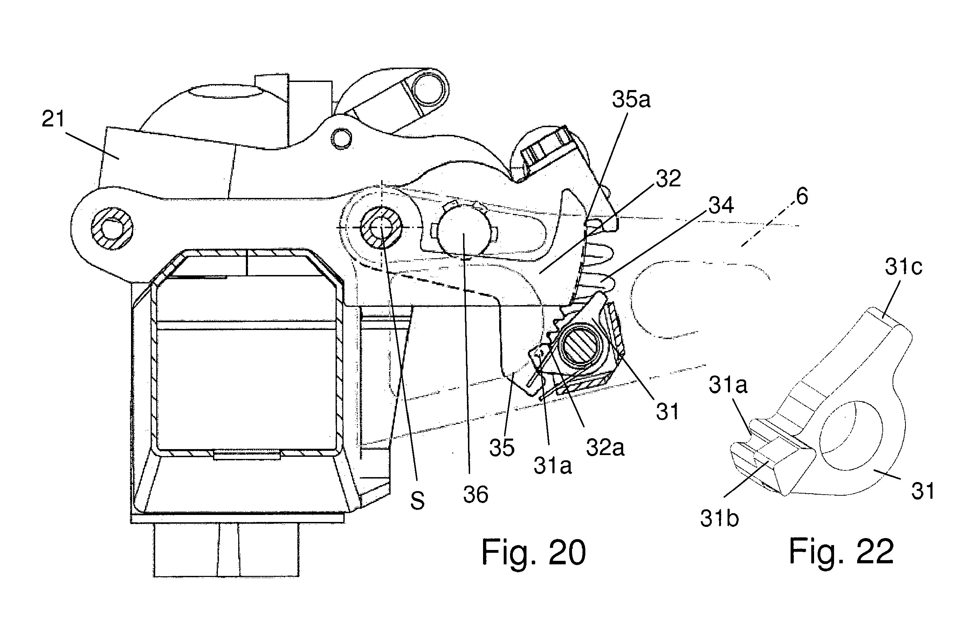

- Fig. 20: einen Schnitt durch den Kupplungsbereich in gespannter Position,

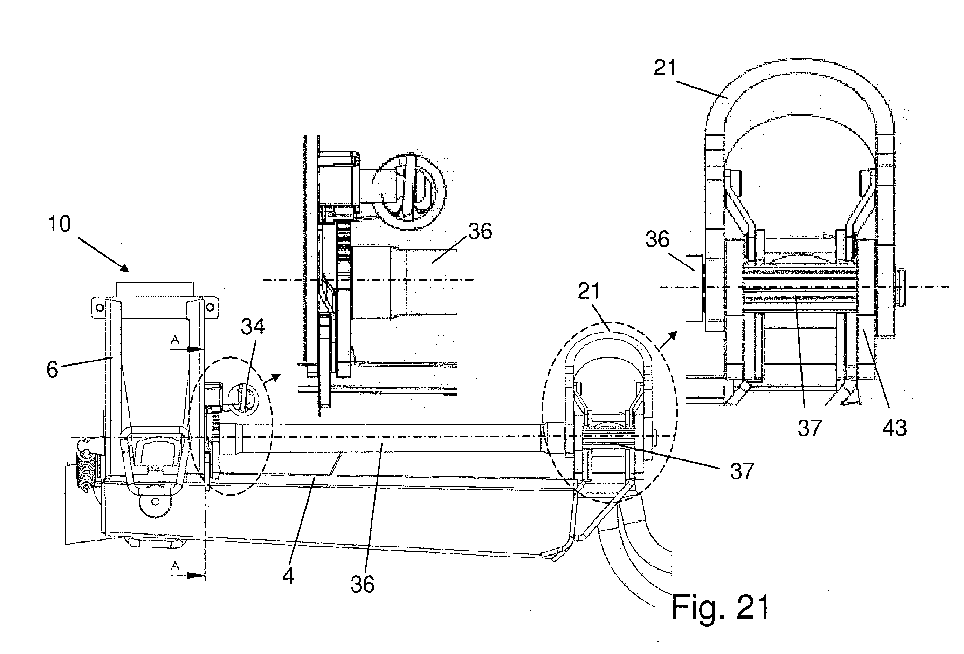

- Fig. 21: einen Schnitt längs des zentralen Trägers zur Verdeutlichung der Schnittführung der Figuren 16 bis 20,
- Fig. 22: eine Detailansicht der Klinke,
- Fig. 23: eine perspektivische Ansicht des Viergelenks der Kupplungsvorrichtung samt Explosionsdarstellung,
- Fig. 24: eine Seitenansicht eines Kraftfahrzeugs mit angebrachtem, einsatzbereitem Lastenträger,
- Fig. 25: eine Draufsicht auf Fig. 24,
- Fig. 26: eine perspektivische Ansicht des zentralen Bereichs des Lastenträgers gemäß dem zweiten Ausführungsbeispiel mit geöffneter Kupplungsvorrichtung,
- Fig. 27: eine andere perspektivische Ansicht von Fig. 26,

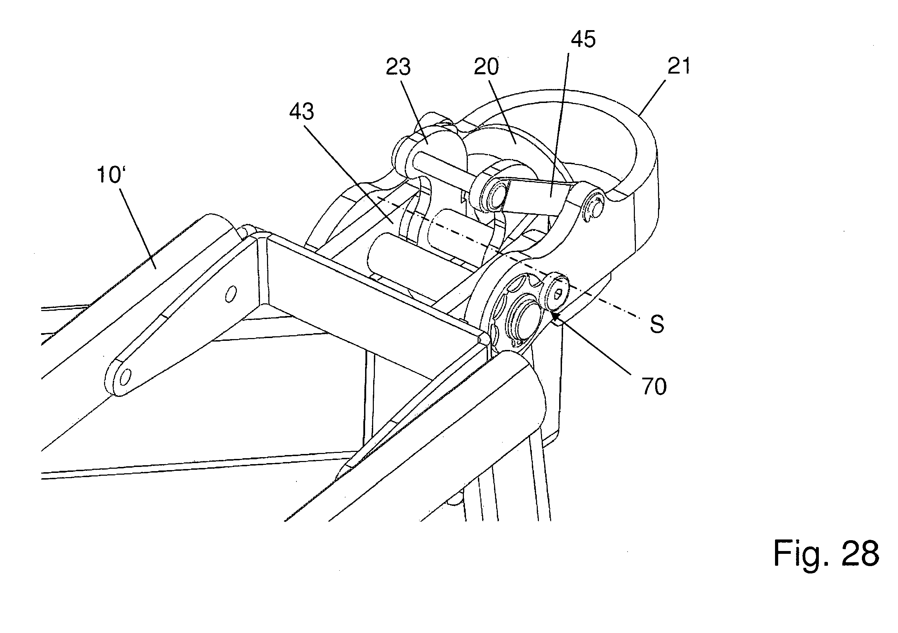

- Fig. 28: eine perspektivische Ansicht des Gelenks der Kupplungsvorrichtung,

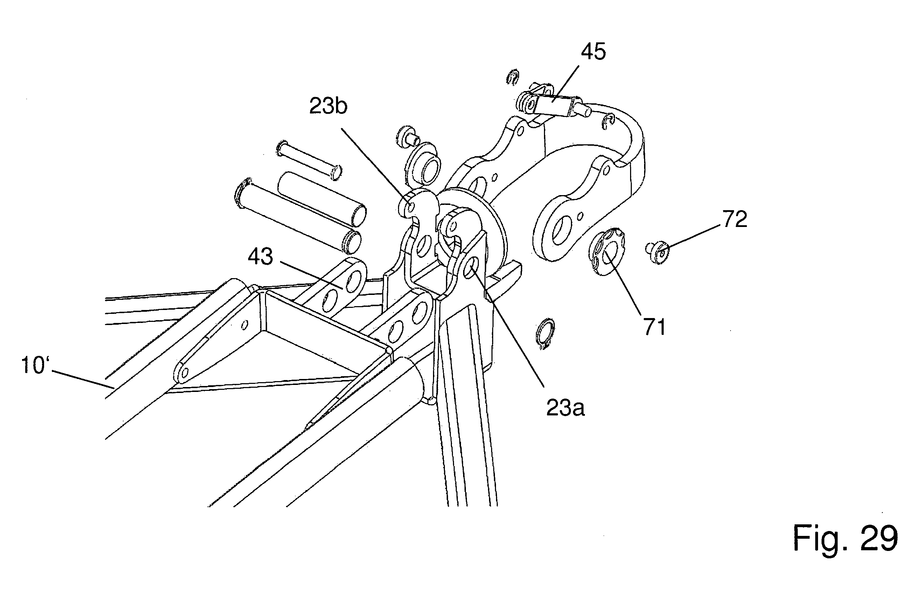

- Fig. 29: eine Fig. 28 entsprechende Explosionsdarstellung
- Fig. 30: eine perspektivische Ansicht des zentralen Bereichs des Lastenträgers in einer auf eine Anhängerkupplung aufgesetzten, gespannten Position,
- Fig. 31: eine andere perspektivische Ansicht von Fig. 30,
- Fig. 32: eine Schnittdarstellung durch die geöffnete Kupplungsvorrichtung,
- Fig. 33: eine Schnittdarstellung durch die geschlossene Kupplungsvorrichtung bei Beginn des Spannens (Durchmesser Kopf 50 mm),
- Fig. 34: eine Schnittdarstellung durch die gespannte Kupplungsvorrichtung (Durchmesser Kopf 49,5 mm),
- Fig. 35: eine Schnittdarstellung durch die gespannte Kupplungsvorrichtung (Durchmesser Kopf 50 mm),
- Fig. 36: eine Schnittdarstellung durch die Kupplungsvorrichtung bei Beginn des Öffnens (Durchmesser Kopf 50 mm),
- Fig. 37: eine Seitenansicht der Kupplungsvorrichtung zur Darstellung der Schnittlage,
- Fig. 38: eine Seitenansicht der Kupplungsvorrichtung mit Darstellung der Bahnkurve des Spannbügels,

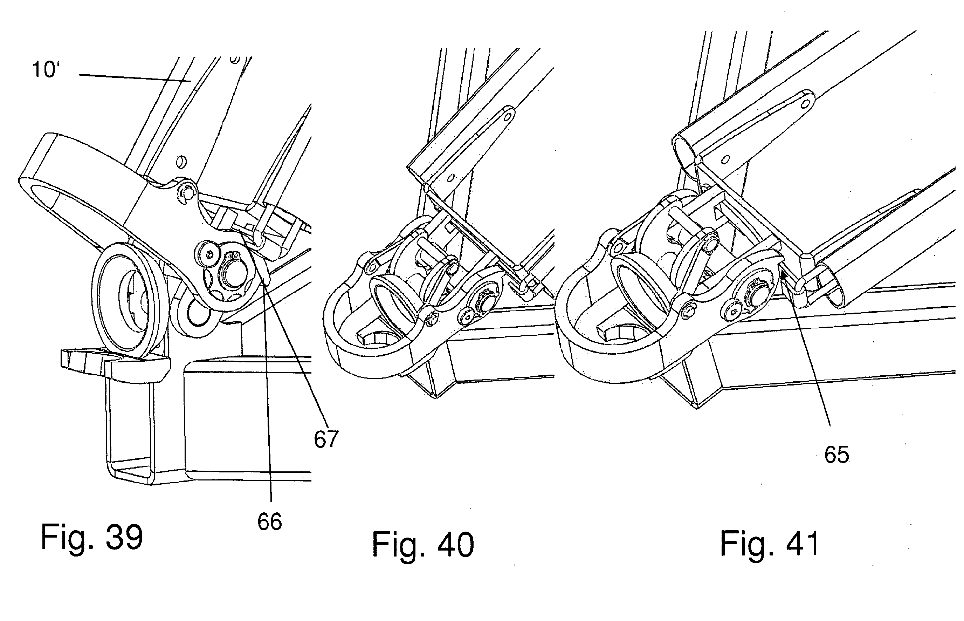

- Fig. 39: eine perspektivische Ansicht des Kupplungsbereichs in geöffneter Stellung,
- Fig. 40: eine perspektivische Ansicht des Kupplungsbereichs beim Schließen, und
- Fig. 41: eine perspektivische Ansicht des Kupplungsbereichs in geschlossener, verriegelter Stellung.

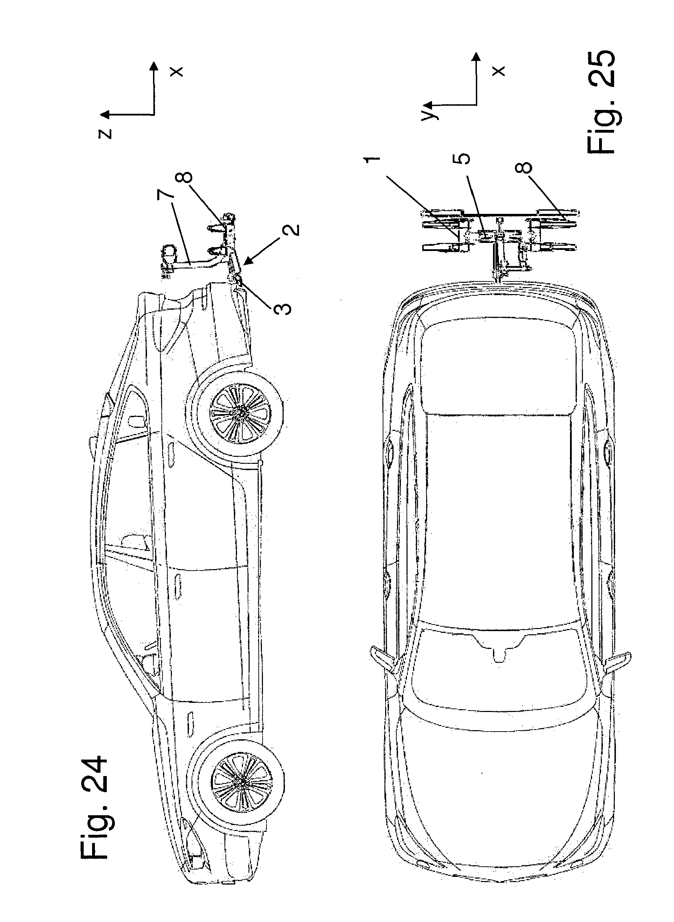

Bei der folgenden Beschreibung wird von einem als Heckträger an einer Anhängerkupplung angebrachten Lastenträger 1, wie in den Figuren 24 und 25 dargestellt, ausgegangen. Die Richtungsangaben beziehen sich auf die normale Fahrtrichtung des Fahrzeugs, wobei x die Richtung entgegen der Fahrtrichtung, y die Querrichtung und die vertikale Richtung mit z bezeichnet.

Ein zusammenklappbarer Lastenträger 1, der vorliegend dem Transport von zwei Fahrrädern oder zum Transport sonstiger Lasten, wie beispielsweise Skiern, Snowboards, einer Heckbox, dienen kann, ist mit Hilfe einer Kupplungsvorrichtung 2 an einer Anhängerkupplung 3 eines Kraftfahrzeugs anbringbar. Die Anhängerkupplung 3 weist hierbei einen im Wesentlichen kugelförmigen Kopf 3a mit einer ebenen Oberseite 3b und einen von unten in die Kugel eindringenden Hals 3c auf.

Der Lastenträger 1 hat einen zentralen Träger 4, welcher bei einem korrekt an einem Kraftfahrzeug als Heckträger angebrachten Lastenträger 1 in Fahrzeuglängsrichtung verlaufend ausgerichtet ist und im Querschnitt im Wesentlichen die Gestalt eines geschlossenen Hohlprofils aufweist. An einem Ende des zentralen Trägers 4 ist die Kupplungsvorrichtung 2 angeordnet, am anderen Ende des zentralen Trägers 4 ist der zusammenklappbar ausgebildete, den eigentlichen Ladebereich bildende Teil des Lastenträgers 1 vorgesehen. Hierfür sind zwei Trägerarme 5 mittels Konsolen 6 vorliegend exzentrisch bezüglich der Mittellängsachse des zentralen Trägers 4 verschwenkbar um Trägerarm-Schwenkachsen S angebracht, wobei die Trägerarme 5 in ihrer zusammengeklappten Stellung im Wesentlichen parallel zueinander angeordnet sind und in ihrer aufgeklappten, einsatzbereiten Stellung im Wesentlichen miteinander fluchten. Ein etwa um 90° gebogen ausgebildeter Stützbügel 7 ist mit seinem horizontal verlaufenden Schenkel oberhalb des zentralen Trägers 4, zwischen den schwenkbar angebrachten Endbereichen der Trägerarme 5 angeordnet und erstreckt sich mit seinem vertikal verlaufenden Schenkel etwas beabstandet von der Kupplungsvorrichtung 2 nach oben.

Obwohl nicht näher beschrieben können bei einer alternativen Ausgestaltung die Konsolen samt Trägerarmen auch auf der Mittellängsachse des zentralen Trägers angeordnet sein.

Sollen mit dem aufgeklappten Lastenträger 1 beispielsweise zwei Fahrräder transportiert werden, so stehen dieselben parallel zueinander, in y-Richtung ausgerichtet, mit ihren Rädern auf entsprechend ausgebildeten Stellbereichen 8 an den Trägerarmen 5 und werden im oberen Bereich mittels nicht im Detail dargestellter Haltern, Schellen, Bügeln o.ä. mit dem Stützbügel 7 auf an sich bekannte Weise verbunden. Die Trägerarme 5 sind hierbei derart ausgebildet, dass sie um ihre Längsachse drehbar in der jeweiligen Konsole 6 angeordnet sind, so dass die hieran gabelförmig ausgebildeten Stellbereiche 8 für die zu befördernde Last im Nichtgebrauchsfall platzsparend ausgerichtet werden können. Bei Gebrauch sind die Trägerarme 5 jedoch formschlüssig mit dem Stützbügel 7 verbunden und in ihren Konsolen 6 gelagert. Alternativ können die Trägerarme auch starr in den Konsolen angeordnet sein oder ggf. auch einstückig hiermit ausgebildet sein. Aufgrund ihrer Funktion wird auf die Gesamtheit von Konsole 6 und Trägerarm 5 sowie den Stellbereich 8 auch als Hebel 10 eingegangen. Zum Betätigen kann ein entsprechender, nicht dargestellter Griffbereich an allen Bereichen ausgebildet oder steif hiermit verbunden sein.

Der vorliegend in Fahrtrichtung des Fahrzeugs rechts angeordnete Trägerarm 5 ist gleichzeitig Betätigungselement für die Kupplungsvorrichtung 2, während der zweite Trägerarm 5 vorliegend keine in Verbindung mit der Kupplungsvorrichtung 2 stehende Zusatzfunktion hat.

Im Folgenden werden der Aufbau und die Funktion der Kupplungsvorrichtung 2, welche dazu dient, den Lastenträger 1 mit der Anhängerkupplung 3 sicher zu verbinden, näher beschrieben.

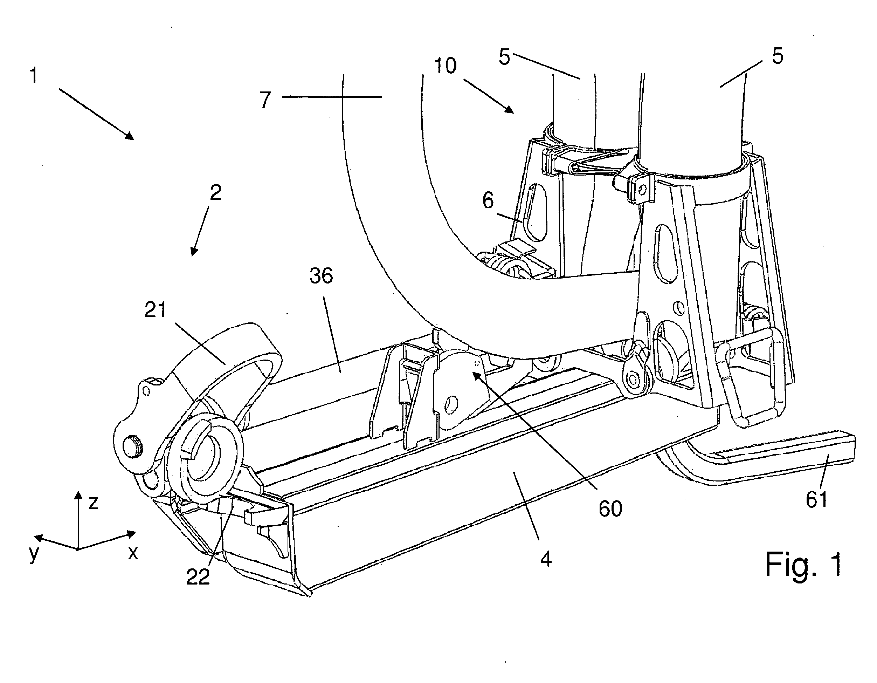

Der eigentliche Kupplungsbereich, also der Bereich, in welchem der Lastenträger 1 mit der Anhängerkupplung 3 verbunden ist, weist als wesentliche Teile eine stationär bezüglich des zentralen Trägers 4 ausgebildete Kalotte 20 und einen relativ hierzu beweglichen Spannbügel 21 auf. Für eine Stabilisierung der Position des Lastenträgers 1 vor dem Spannen ist zudem eine V- oder U-förmige Abstützung 22 im Halsbereich der Anhängerkupplung 3 vorgesehen, wie beispielsweise in Fig. 1 ersichtlich. Diese Abstützung 22 hat jedoch für das eigentliche Spannen der Kupplungsvorrichtung 2 keine Funktion. Eine derartige Stabilisierung ist vom Prinzip her beispielsweise aus der DE 195 40 041 A1 bekannt. Im Prinzip kann die Stabilisierung jedoch auch anders ausgebildet sein, solange sie nicht mit den Bewegungsabläufen beim Schließen des Spannbügels 21 und dem Spannen desselben nicht interferiert. Auf der Rückseite der Kalotte 20 ist ein spiegelbildlich zu einer Mittelebene ausgebildetes Gestell 23 mit mehreren Lagerstellen 23a, 23b zur trägerfesten Lagerung der Mechanik für die Kupplungsvorrichtung 2 ausgebildet, auf welche an späterer Stelle näher eingegangen wird.

Für ein definiertes Spannen und Sichern der Kupplungsvorrichtung 2 ist auf der kupplungsseitigen Außenseite der rechten Konsole 6 eine Rastvorrichtung 30 angeordnet, welche eine Klinke 31, die mit einem Zahnsegment 32 zusammenwirkt, eine Schenkelfeder 33 und eine Zugfeder 34 aufweist. Ferner ist Teil der Rastvorrichtung 30 eine Steuerplatte 35, welche fest mit dem zentralen Träger 4 verbunden ist.

Die Klinke 31 der Rastvorrichtung 30 ist verschwenkbar auf einem Bolzen 6a an der Außenseite der Konsole 6 innerhalb einer Abdeckung 6b angeordnet. Die Klinke 31 weist eine Bohrung, mit der sie auf dem Bolzen 6a verschwenkbar sitzt, und zwei sich nach außen erstreckende Enden auf, wobei an einem Ende vorliegend zwei Rastzähne 31 a und seitlich versetzt hierzu ein Nocken 31 b ausgebildet sind, und am anderen Ende eine Nase 31 c ausgebildet ist. Natürlich kann auch eine andere geeignete Anzahl von Rastzähnen vorgesehen sein. Die Schenkelfeder 33 ist auf dem Bolzen 6a sitzend benachbart der Klinke 31 positioniert, wobei sie mit einem Schenkel an einem Anschlag der Abdeckung 6b und mit dem anderen Schenkel an der Rückseite des Nockens 31 b anliegt und dadurch mit den Rastzähnen 31 a in Richtung des Zahnsegments 32 vorgespannt wird.

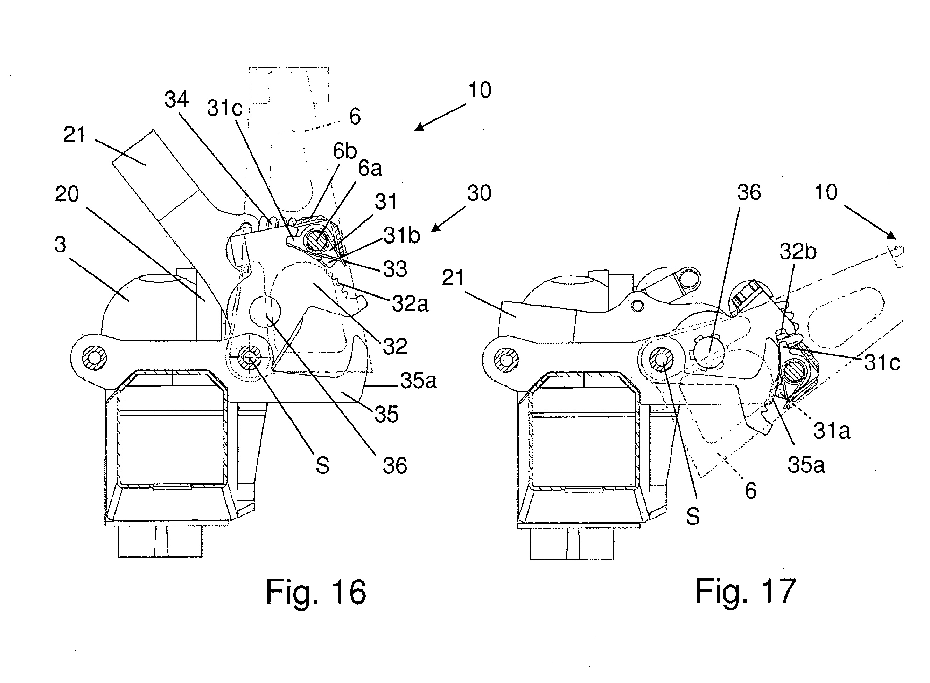

Das Zahnsegment 32 weist seinerseits einen Zahnbereich 32a und eine beabstandet vom Zahnbereich 32a ausgebildete, in Richtung Zahnbereich 32a ausgerichtete Nasenmitnahmeöffnung 32b auf, in welcher die Nase 31 c der Klinke 31 im geöffneten Zustand der Kupplungsvorrichtung 2 aufgenommen ist, wie in Fig. 16 dargestellt.

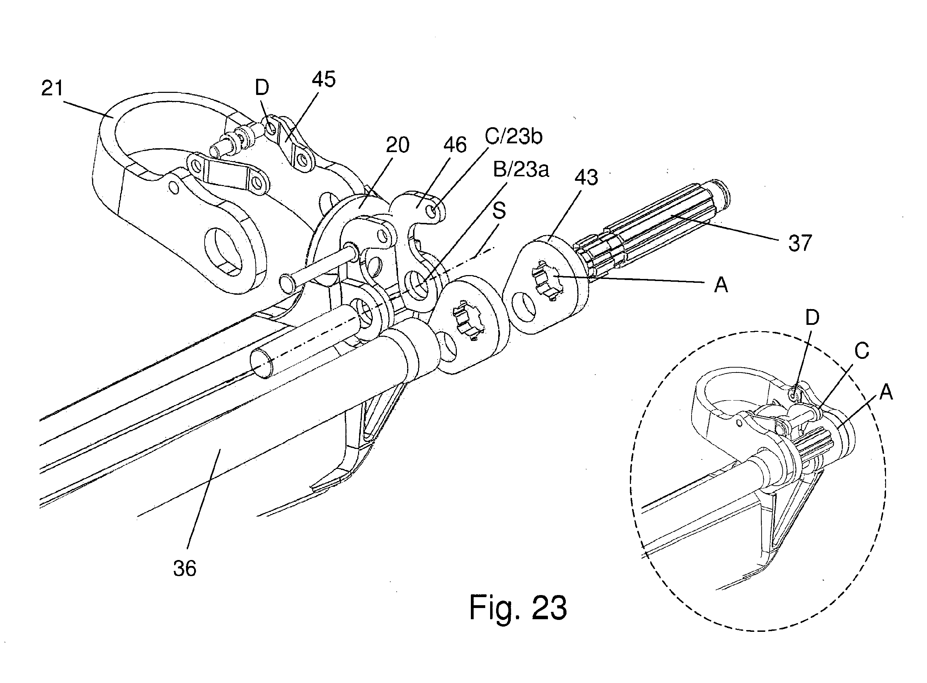

Die Konsole 6 mit dem Bolzen 6a, auf welchem die Klinke 31 sitzt, und das Zahnsegment 32 sind um besagte Träger-Schwenkachse S verschwenkbar angeordnet. Das Zahnsegment 32 ist ferner mit einem Ende eines vorliegend versetzt zur Träger-Schwenkachse S angeordneten Übertragungselements 36 formschlüssig verbunden, welches die Bewegung des Zahnsegments 32 (und damit im Wesentlichen auch die Bewegung der Konsole 6) an den am anderen Ende des Übertragungselements 36 angeordneten Kupplungsbereich überträgt. Das Übertragungselement 36 ist vorliegend mehrteilig in Gestalt eines Torsionselements mit einem rohrförmigen Torsionsbereich und einem hiermit drehsteif verbundenen profilierten Übertragungsbereich (Profilwelle 37) ausgebildet (vgl. Fig. 23).

Zur Betätigung des Spannbügels 21 sind auf der Profilwelle 37 des Übertragungselements 36 zwei parallel, durch zur Profilwelle 37 passende Gestaltung der Aufnahmeöffnung zueinander ausgerichtete Kurbellaschen 43 vorgesehen. Die Profilwelle 37 überträgt durch ihre profilierten Bereiche das Drehmoment des Übertragungselements 36 auf beide Kurbellaschen 43.

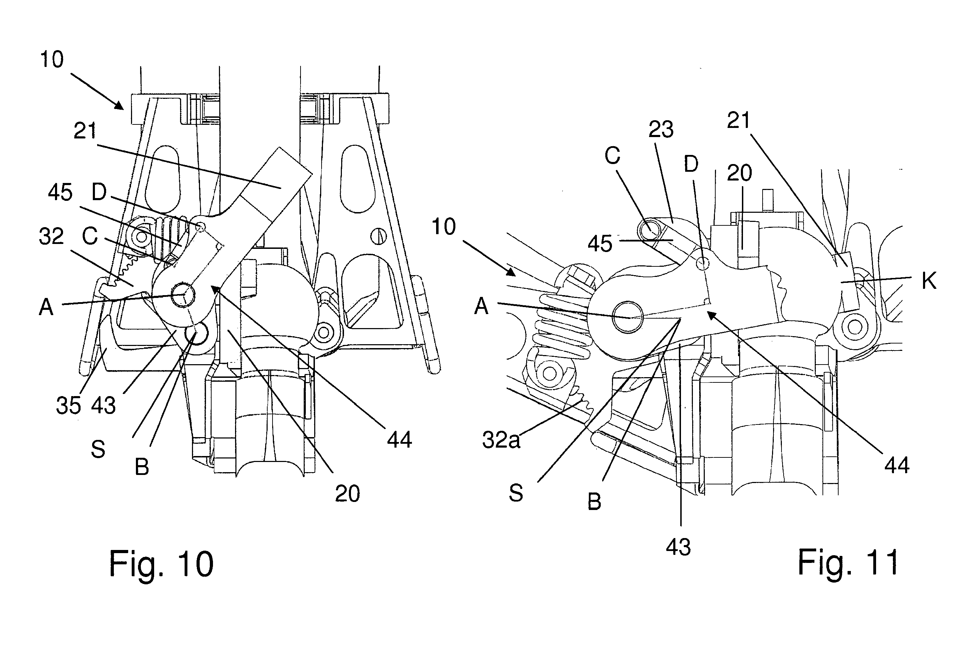

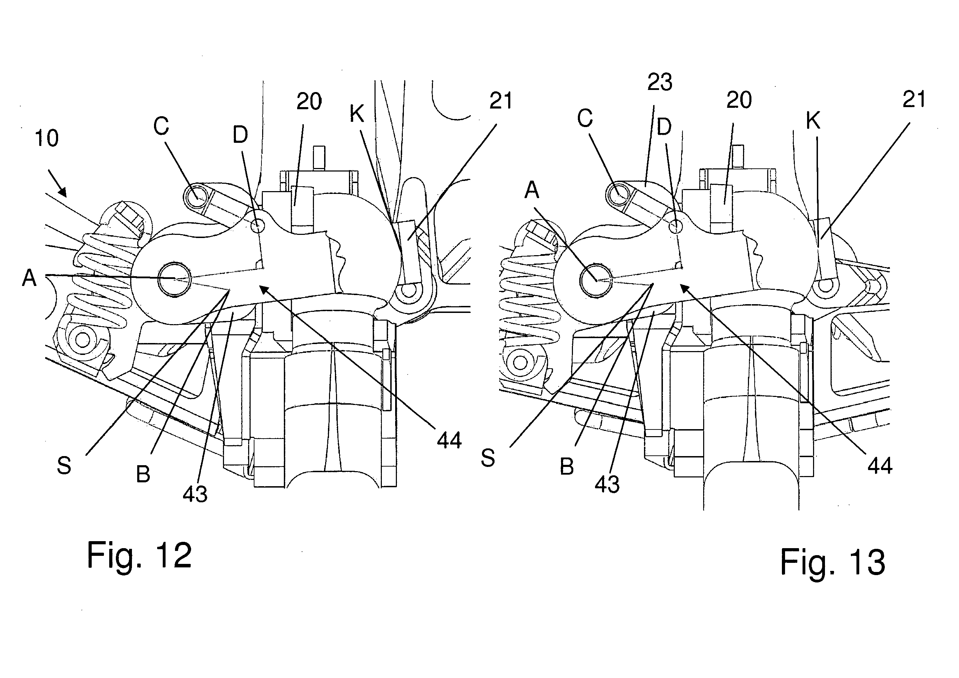

Die beiden Kurbellaschen 43 sind vorliegend Teil zweier spiegelbildlich ausgebildeter Viergelenke 44, welche in den Figuren 10 bis 13 mit einem Ausbruch am Spannbügel 21 zur Darstellung des Abstands des Kopfes 3a der Anhängerkupplung 3 dargestellt sind, und welche sicherstellen, dass der Spannbügel 21 beim Schwenken der Konsole 6 zuerst über den Kopf 3a der Anhängerkupplung 3 geschwenkt und bei einer Fortführung der Schwenkbewegung der Konsole 6 gespannt wird. Die beiden Viergelenke 44 sind über formschlüssige Querverbindungen (profilierter Bereich der Profilwelle 37) in ihren Bewegungen synchronisiert. Im Folgenden wird der Einfachheit halber nur auf das äußere, d.h. fahrzeugseitige Viergelenk 44 und dessen einzelne Bauteile näher eingegangen.

Wird nach dem Aufsetzen des Lastenträgers 1 auf die Anhängerkupplung 3 und dem Einnehmen einer stabilisierten Position die Konsole 6 durch ein vom Benutzer von Hand bewirktes Schwenken des Trägerarm 5 und Stellbereich 8 in einer Schwenkbewegung von der im Wesentlichen vertikalen Ausrichtung nach unten in eine in der Endstellung horizontale Ausrichtung bewegt, macht die Kurbellasche 43 des Viergelenks 44, verbunden über das Übertragungselement 36 mit Profilwelle 37, eine entsprechende Bewegung, wobei die Mittellängsachse des Übertragungselements 36 vorliegend einen Kreisbogen mit einem Radius von ca. 20 mm um die Trägerarm-Schwenkachse S beschreibt. Im Folgenden wird auf den Gelenkpunkt, an welchem eine Zwangskopplung durch das Profil des Übertragungselements 36 mit der Kurbellasche 43 vorgesehen ist, als ersten Gelenkpunkt A Bezug genommen. Die Profilwelle 37 dient durch auf derselben ausgebildete zylindrische Bereiche als Achse im Gelenkpunkt A.

Auf den vom Gelenkpunkt A beabstandeten Gelenkpunkt der Kurbellasche 43 wird als zweiten Gelenkpunkt B Bezug genommen. Der zweite Gelenkpunk B wird durch die erste Lagerstelle 23a des Gestells 23 auf der Rückseite der Kalotte 20 gebildet. Die zweite Lagerstelle 23b des Gestells 23 am Ende eines gekrümmt ausgebildeten, sich weg von der Kalotte 20 erstreckenden Arms 46 bildet den dritten Gelenkpunk C, in welchem eine kurze Schwinge 45 schwenkbar gelagert ist. Das freie Ende der Schwinge 45 ist mit einem am Spannbügel 21 ausgebildeten, vierten Gelenkpunk D beweglich gelagert. Der Spannbügel 21 sitzt seinerseits mit einer auf einer Seite leicht in Längsrichtung vergrößerten Öffnung auf der Profilwelle 37 des Übertragungselement 36, wobei in diesem Lagerbereich die Profilierung des profilierten Bereichs unterbrochen ist, in direkter Nachbarschaft der Kurbellasche 43, welche in einem profilierten Bereich angeordnet ist. Die vorliegend leicht langlochartige Öffnung auf der Trägerseite hat jedoch keinen Einfluss auf das Spannen des Spannbügels 21.

Durch die exzentrische Schwenkbewegung des Übertragungselements 36 und der hiermit verbundenen Kurbellasche 43, welche zumindest in einem ersten Schwenkbereich im Wesentlichen synchron mit der Schwenkbewegung der Konsole 6 verläuft, wird der erste Gelenkpunkt A, durch welchen die Längsachse des Übertragungselements 36 verläuft, aus einer Position von nahezu oberhalb der Trägerarm-Schwenkachse S (siehe Fig. 10) in eine Position nahezu neben der Trägerarm-Schwenkachse S bewegt (vgl. Fig. 11), so dass sich die Enden des auf dem Übertragungselement 36 angeordneten Spannbügels 21 von der Mitte des Kopfes 3a der Anhängerkupplung 3 wegbewegen, wobei sie sich leicht absenken. Aufgrund der Zwangskopplung über die kurze Schwinge 45 erfolgt gleichzeitig ein deutlich größeres Absenken des Bügelbereichs des Spannbügels 21, so dass der Bügelbereich in einem Anlagepunkt K in Anlage an den Kopf 3a gelangt, wie in Fig. 11 und 17 dargestellt, wobei Fig. 17 bereits den Beginn des Spannens zeigt. Dieser Schwenkbereich entspricht im Wesentlichen demjenigen, in dem das Zahnsegment 32 mitgenommen wird.

Ca. 30° (20° bei kleinstem Kugeldurchmesser des Kopfes 3a der Anhängerkupplung 3) vor Erreichen der Horizontalen durch den Hebel 10 legt sich der Spannbügel 21 an den Kopf 3a der Anhängerkupplung 3 an. Aufgrund der Anlage des Spannbügels 21 am Kopf 3a der Anhängerkupplung 3 im Anlagepunkt K wirkt vom das Viergelenk ABCD eine Gegenkraft über das Übertragungselement 36 auf das Zahnsegment 32, so dass zwar die Konsole 6 mit der hieran schwenkbar angebrachten Klinke 31 durch die Kraft des Bedieners weiter um die Trägerarm-Schwenkachse S schwenkend nach unten bewegt wird, das Zahnsegment 32 samt dem hieran angebrachten Übertragungselement 36 aber ruht.

Durch das Weiterschwenken des Hebels 10 bewegt sich die konsolenfeste Klinke 31 mit ihrer Nase 31 c aus der Nasenmitnahmeöffnung 32b am Zahnsegment 32 heraus, wodurch sich die zwischen Konsole 6 und Zahnsegment 32 angeordnete Zugfeder 34 spannt. Durch die Freigabe der Nase 31 c der Klinke 31 nach Verlassen der Nasenmitnahmeöffnung 32b des Zahnsegments 32 wird die Klinke 31 nicht mehr in ihrer geöffneten Stellung gehalten, sondern die Federkraft der Schenkelfeder 33 bewirkt, dass sich die Sperrzähne 31 a der Klinke 31 in Richtung Zahnsegment 32 bewegen. In dem Bereich, in welchem die Steuerplatte 35 in Anlage an den Nocken 31 b der Klinke 31 ist, verhindert jedoch die Steuerplatte 35 mit ihrer Steuerbahn 35a ein Einfallen der Sperrzähne 31 a in den Zahnbereich 32a des Zahnsegments 32.

Verlässt beim Weiterschwenken der Konsole 6 der Nocken 31 b die Steuerbahn 35a der Steuerplatte 35, so entfällt die Gegenkraft auf die Klinke 31 und es können die Sperrzähne 31 a der Klinke 31 in den Zahnbereich 32a des Zahnsegments 32 einfallen, so dass wiederum eine formschlüssige Koppelung zwischen der Schwenkbewegung der Konsole 6 und der Bewegung des Übertragungselements 36 vorliegt. Die erneute Mitnahme des Zahnsegments 32 erfolgt über einen Winkelbereich von ca. 12° und endet mit der Einnahme der horizontalen Ausrichtung des Hebels 10, d.h. der Konsole 6 samt Trägerarm 5. In diesem Zustand wird das Übertragungselement 36 elastisch verformt, d.h. es stellt sich neben der Torsion auch ein Winkelversatz ein, welcher durch ein geeignetes Spiel ausgeglichen wird und keine Beeinträchtigung der Funktion darstellt.

Damit bildet die Steuerplatte 35 mit ihrer Steuerbahn 35a in Verbindung mit dem Nocken 31 b der Klinke 31 eine Ausgleichsanordnung, welche sicherstellt, dass bei laut Norm zulässigen Durchmesserabweichungen des Kopfes 3a der Anhängerkupplung 3 unabhängig von der Schwenkbewegung des vom Bediener betätigten Hebels 10 eine definierte Spannkraft vom Spannbügel 21 auf den Kopf 3a ausgeübt wird, so dass der Lastenträger 1 auch bei Durchmesserabweichungen des Kopfes 3a der Anhängerkupplung 3 immer etwa gleich fest auf der Anhängerkupplung 3 sitzt. Zudem wird der Bewegungsablauf des Hebels 10 bei der Übertragung auf die Kupplungsvorrichtung in einzelne Teilbereiche unterteilt, wobei in einem ersten Teilbereich der Schwenkbewegung das Zahnsegment 32 mit der Klinke 31 kraftschlüssig mitgenommen wird, wobei dieser Teilbereich im Wesentlichen dem Einschwenken dem Spannbügels 21 bis zum Inanlagegelangen an den Kopf 3a der Anhängerkupplung entspricht, und in einem zweiten Teilbereich der Schwenkbewegung des Hebels 10 ein formschlüssiger Eingriff der Sperrzähne 31 a in den Zahnbereich 32a des Zahnsegments 32 erfolgt, welcher das eigentliche Spannen des Spannbügels 21 bewirkt. Hierbei ist das Viergelenk derart ausgerichtet, dass Kurbellasche 43, Spannbügel 21 und die Kugel 3a der Anhängerkupplung 3 einen Kniehebel (Gelenkpunkte A, B, Anlagepunkt K) in fast gestreckter (oder gestreckter) Lage bilden, wodurch sich sehr große Klemmkräfte erzeugen lassen.

Zwischen den beiden Teilbereichen der Bewegung erfolgt eine Schwenkbewegung des Hebels 10 während der sich die Klinke 31 mit ihren Sperrzähnen 31a aufgrund der Wirkung der Steuerbahn 35a der Steuerplatte 35 am Zahnbereich 32a entlangbewegt, d.h. es ist ein dritter Teilbereich der Bewegung vorgesehen, in welchem zwar der Spannbügel 21 anliegt, aber zum Ausgleich von unterschiedlichen Kugeldurchmessern des Kopfes 3a noch kein Spannen erfolgt. Das eigentliche Spannen erfolgt somit stets in einem Bewegungsbereich, der durch die Endstellung des Hebels 10, d.h. der horizontalen Ausrichtung der Konsole 6, bestimmt ist.

Ein der Nasenmitnahmeöffnung 32b gegenüberliegender Anschlag 32c stellt vorliegend sicher, dass das Zahnsegment 32 bei dem Winkel der Konsole 6 von 12° zur Horizontalen immer einen gegenüber liegenden Sperrzahn 31 a findet und nicht außer Eingriff kommt, falls der Widerstand durch das Viergelenk stärker als die Zugfeder 34 ist. Erfolgt jedoch eine Zwangsmitnahme der Klinke 31 durch den Anschlag 32c, so ist nicht notwendigerweise eine im Sollbereich liegende Spannkraft des Spannbügels 21 sichergestellt.

Nach Erreichen der horizontalen Ausrichtung des Hebels 10 wird vorliegend die Konsole 6 im horizontal ausgerichteten Zustand verriegelt, so dass die Spannkraft aufrechterhalten wird. Die Verriegelung kann jedoch auch an einer anderen Stelle des Hebels 10 erfolgen, also beispielsweise weiter von der Schwenkachse entfernt am Trägerarm 5 oder gegebenenfalls auch am Stellbereich 8.

In diesem einseitig aufgeklappten Zustand des Lastenträgers 1 ist, allein durch die eine Schwenkbewegung der Konsole 6 samt Trägerarm 5 die Kupplungsvorrichtung 2 somit vollständig gespannt und an der Anhängerkupplung 3 gesichert. Durch die vorstehend beschriebene Mechanik wird unabhängig von der Stellung der Klemmung bei Anlage des Spannbügels 21 immer der gleiche Spannweg erreicht, wobei eine gewisse Toleranz durch die Zahnteilung vorgesehen ist.

Das nachfolgende Herabschwenken der zweiten Konsole 6 samt zweitem Trägerarm 5 und dessen entsprechendes Verriegeln in der horizontalen Stellung, um den Lastenträger 1 einsatzbereit zu machen, hat keinen Einfluss mehr auf das Spannen der Kupplungsvorrichtung 2.

Im Prinzip kann auch die zweite Konsole 6 samt zweitem Trägerarm 5 zuerst herabgeschwenkt und verriegelt werden, wodurch sich der Lastenträger 1 einfacher an der Anhängerkupplung 3 ausrichten lässt.

Das Abbauen des Lastenträgers 1 von der Anhängerkupplung 3 erfolgt durch Entriegeln und Hochklappen der (spannfunktionslosen) Konsole 6 samt Trägerarm 5. Anschließend wird die zweite Konsole 6 entriegelt, das durch Niederdrücken des Hebels 10 etwas erleichtert werden kann. Durch das Entriegeln entspannt sich das elastisch leicht verformte Übertragungselement 36, wodurch sich ein automatisches Rückschwenken der Konsole 6 um ca. 10° ergibt. Der Benutzer kann nun die Konsole 6 samt Trägerarm 5 in die vertikale Stellung hochschwenken und in derselben sichern. Beim Anheben der Konsole 6 wird die Klinke 31 dann bei ca. 12° durch die Steuerplatte 35 über den Nocken 31 b aus dem Zahnbereich 32a des Zahnsegments 32 gehoben. In diesem Zustand ist der Zahneingriff bereits kraftfrei. Zugfeder 34 und Reibung bewirken, dass das Zahnsegment 32 in seiner Position verbleibt und erst bei Eingriff der Nase 31 c in die Nasenmitnahmeöffnung 32b weiterbewegt und die Mechanik vollständig geöffnet wird.

Der Lastenträger 1 ist ferner um eine in y-Richtung verlaufende Achse vom Fahrzeug weg nach unten abkippbar, um das Be- und Entladen zu erleichtern oder den Kofferraum des Fahrzeugs zugänglich zu machen. Hierfür sind eine Kippvorrichtung 60 mit einem Pedal 61 vorgesehen.

Vorstehend dient der rechte Trägerarm 5, der mit der Konsole 6 verbunden ist, als eigentlicher Hebel 10 zum Betätigen der Kupplungsvorrichtung 2, wobei eine Betätigung desselben natürlich auch durch ein Angreifen am hiermit biegesteif verbundenen Stellbereich oder der Konsole für die zu befördernde Last erfolgen kann. Natürlich kann bei entsprechend gespiegeltem Aufbau der linke Trägerarm in Verbindung mit der linken Konsole die Hebelfunktion übernehmen.

Im Folgenden wird unter Bezugnahme auf die weiteren Figuren der Zeichnung das zweite Ausführungsbeispiel eines Lastenträgers 1 beschrieben. Hierbei sind gleiche oder gleichwirkende Elemente mit den gleichen Bezugszeichen wie beim Ausführungsbeispiel bezeichnet. Sofern nachfolgend nicht ausdrücklich als anders beschrieben, wird auf die Beschreibung des Ausführungsbeispiels verwiesen.

Ein wesentlicher Unterschied zum vorstehend beschriebenen Ausführungsbeispiel ist, dass das Übertragungselement entfällt und die Kupplungsvorrichtung 2 unabhängig von einer Schwenkbewegung eines Hebels, welcher mit den Stellbereichen verbunden ist, mit einem eigenen Hebel 10' betätigt wird. Die Ausgestaltung der nicht in Zusammenhang mit diesem zweiten Ausführungsbeispiel in der Zeichnung dargestellten Hebel mit Konsolen, Trägerarmen und Stellbereichen entspricht dem des ersten Ausführungsbeispiels, jedoch entfällt mit dem Übertragungselement die Spannvorrichtung im Bereich der Konsole. Es ist jedoch prinzipiell auch jeder andere Aufbau eines Lastenträgers möglich, insbesondere nicht faltbare Träger mit Klapp- oder Auszugsmechanismus für die Zugänglichkeit zum Kofferraum

Im Folgenden werden der Aufbau und die Funktion der Kupplungsvorrichtung 2 gemäß dem zweiten Ausführungsbeispiel näher beschrieben.

Der prinzipielle Aufbau von Kalotte 20 am Ende des zentralen Trägers 4 mit einem spiegelbildlich ausgebildeten Gestell 23, welches auf jeder Seite zwei Lagerstellen 23a, 23b, allerdings leicht verändert angeordnet, aufweist, entspricht dem des ersten Ausführungsbeispiels und bildet einen Teil zweier Viergelenke 44. Die Ausgestaltung ist wiederum im Wesentlichen spiegelbildlich zur Mittelebene, so dass nur auf eine Seite im Folgenden näher eingegangen wird.

Im Falle des zweiten Ausführungsbeispiels ist vor dem Spannen und Sichern vorliegend keine Stabilisierung des Lastenträgers 1 auf der Anhängerkupplung 3 vorgesehen.

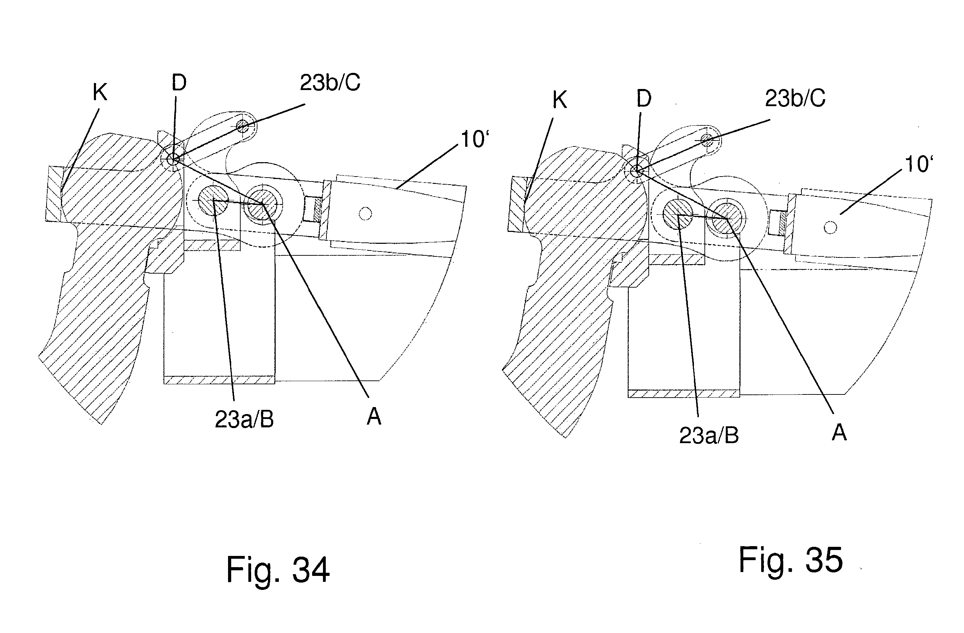

Für ein definiertes Spannen und Sichern der Kupplungsvorrichtung 2 ist - entsprechend dem ersten Ausführungsbeispiel - besagtes Viergelenk 44 vorgesehen, welches wiederum die Umsetzung einer einfachen Schwenkbewegung des Hebels 10' in ein Einschwenken des Spannbügels 21 über den Kopf 3a der Anhängerkupplung 3 mit einem Übergang in ein Spannen mit großer Spannkraft ermöglicht, wobei wieder die Funktion eines Kniehebels zum Spannen genutzt wird. Vorliegend wird, wie aus Fig. 35 ersichtlich, der Kniehebel (Gelenkpunkte A, B, Anlagepunkt K) bis in die Endlage geschwenkt.

Aufgrund der direkten Übertragung der Schwenkbewegung vom Hebel 10' entsprechen die Hebelenden in ihrer Funktion den Kurbellaschen 43 des ersten Ausführungsbeispiels, wobei im Folgenden diese Bezeichnung für die Hebelenden übernommen wird. Die Kurbellaschen 43 sind mit einem ersten Bolzen in den ersten Lagerstellen 23a des Gestells 23 schwenkbar gelagert. Ein zweiter Bolzen ist hebelarmseitig der Hebel-Schwenkachse S angeordnet und lagert die Enden des Spannbügels 21. Dies entspricht dem ersten Gelenkpunkt A des ersten Ausführungsbeispiels. Die erste Lagerstelle 23a des Gestells 23 bildet wie beim ersten Ausführungsbeispiel einen Gelenkpunkt B. Der dritte Gelenkpunkt C wird - entsprechend dem ersten Ausführungsbeispiel - durch die zweite Lagerstelle 23b des Gestells 23 gebildet. An diesem dritten Gelenkpunkt C ist eine Schwinge 45 schwenkbar angeordnet, welche mit ihrem freien Ende am Spannbügel 21 schwenkbar im vierten Gelenkpunkt D gelagert ist.

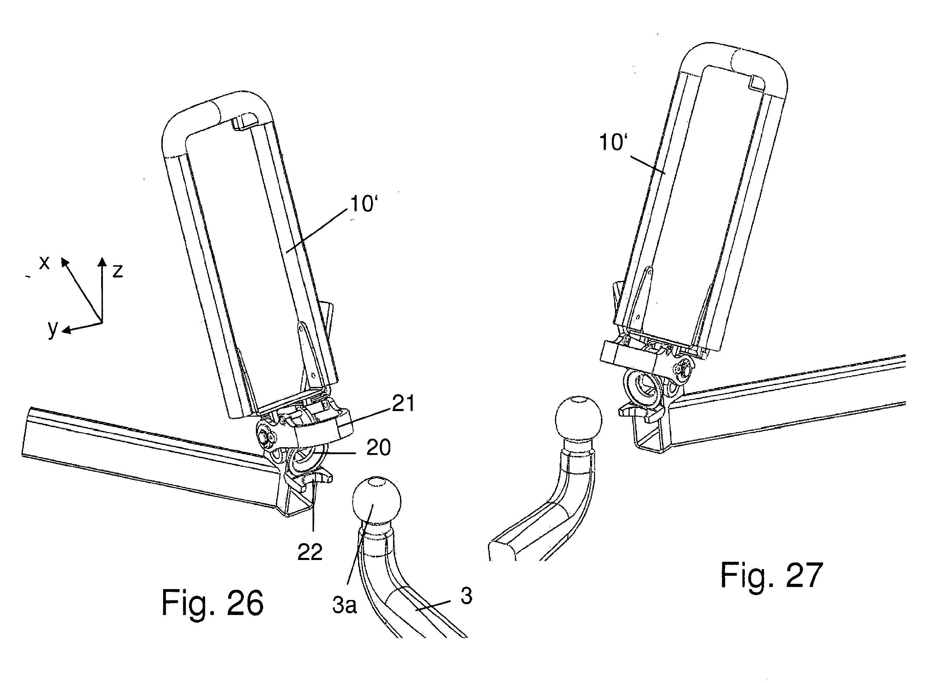

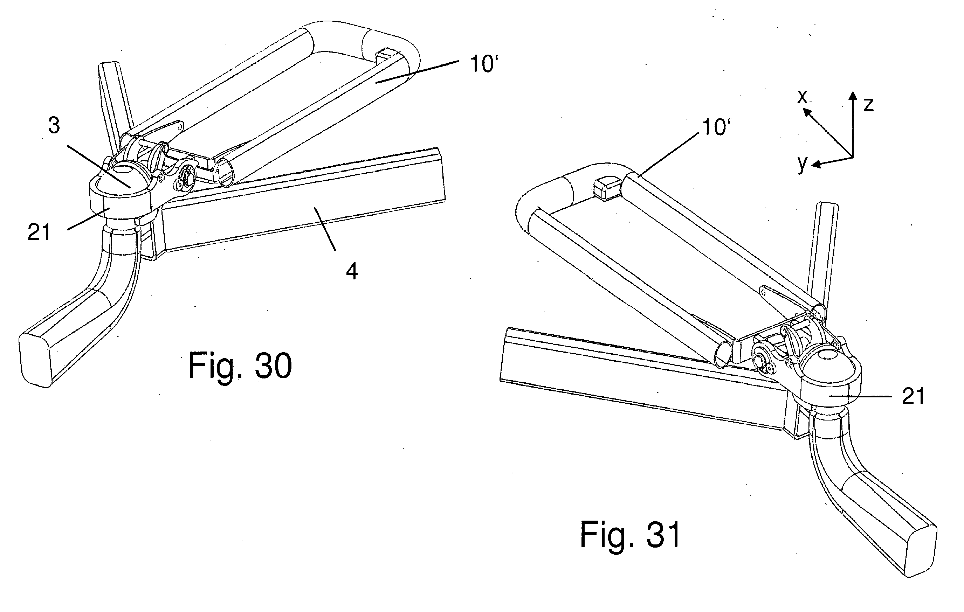

Wird nach dem Aufsetzen des Lastenträgers 1 auf die Anhängerkupplung 3 der Hebel 10' durch ein vom Benutzer von Hand bewirktes Schwenken in einer Schwenkbewegung von der im Wesentlichen vertikalen Ausrichtung (vgl. Fig. 26 und 27) nach unten in eine in der Endstellung im Wesentlichen horizontale Ausrichtung (vgl. Fig. 30 und 31) bewegt, macht die Kurbellasche 43 des Viergelenks 44 eine entsprechende Schwenkbewegung um die mit dem Gelenkpunkt B fluchtende Hebel-Schwenkachse S.

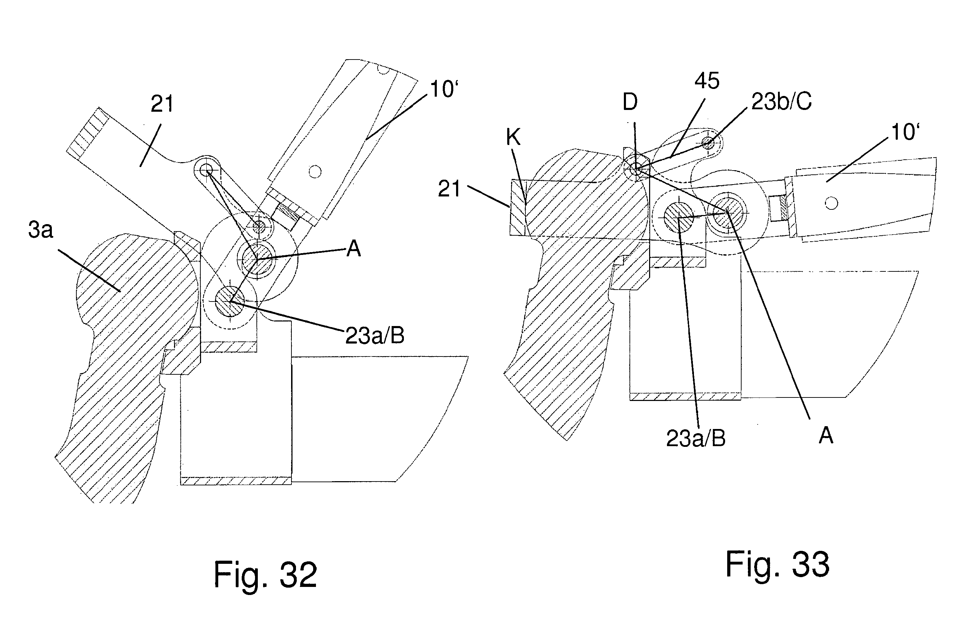

Durch die Schwenkbewegung des Hebels 10' und der hiermit der Kurbellasche 43 wird der erste Gelenkpunkt A aus einer Position von nahezu oberhalb der Hebel-Schwenkachse S (siehe Fig. 32) in eine Position nahezu horizontal neben der Hebel-Schwenkachse S bewegt (vgl. Fig. 33/34), so dass sich die Enden des Spannbügels 21 von der Mitte des Kopfes 3a der Anhängerkupplung 3 wegbewegen, wobei sie sich leicht absenken. Aufgrund der Zwangskopplung über die Schwinge 45 erfolgt gleichzeitig ein deutlich größeres Absenken des Bügelbereichs des Spannbügels 21, so dass der Bügelbereich in einem Anlagepunkt K in Anlage an den Kopf 3a gelangt, wie in Fig. 33 für einen kleineren Kugeldurchmesser des Kopfes 3a und in Fig. 34 für einen etwas größeren Kugeldurchmesser des Kopfes 3a dargestellt.

Einige Grad vor Erreichen der Horizontalen durch den Hebel 10' legt sich hierbei der Spannbügel 21 an den Kopf 3a der Anhängerkupplung 3 an. Aufgrund der Anlage des Spannbügels 21 am Kopf 3a der Anhängerkupplung 3 im Anlagepunkt K wirkt vom das Viergelenk ABCD eine Gegenkraft über den Hebel 10', so dass der Bediener zum eigentlichen Spannen eine erhöhte Kraft aufwenden muss, hierfür aber der Hebel in einem geeigneten Winkel steht, so dass der Bediener gegebenenfalls auch seine Gewichtskraft zum Spannen einsetzen kann. Hierbei sind die geometrischen Verhältnisse des Viergelenks 44 derart gewählt, dass die tangentiale Bewegung des Spannbügels 21 zum Kopf 3a der Anhängerkupplung 3 während der Schwenkbewegung des Hebels 10', welche die eigentliche Spannbewegung bewirkt, durch die Kurbellaschen 43 minimiert ist. Ein gewisses Spiel in der Mechanik des Viergelenks, insbesondere in den Lagern, und die elastische Verformung des Viergelenks 44 ermöglicht das Weiterschwenken des Hebels 10' trotz des Haltens des Spannbügels 21 im Anlagepunkt K. Somit bildet hierbei das Lagerspiel und die Elastizität eine Art Ausgleichsanordnung zwischen der Bewegung des Viergelenks 44 und der Bewegung des Kniehebels. Im vollständig gespannten Zustand ist der Hebel 10' vorliegend horizontal ausgerichtet und verriegelt.

Zum Verriegeln ist gemäß dem vorliegenden Ausführungsbeispiel eine Verriegelungsvorrichtung 65, gebildet durch eine am Spannbügel 21 vorstehende Nase 66 und eine durch einen Blechstreifen am Hebel 10' ausgebildete Raste 67 vorgesehen, wobei zum Verriegeln die Nase 66 die Raste 67 hintergreift und formschlüssig gehalten wird. Zum Entriegeln ist ein entsprechendes, ergonomisch angeordnetes Entriegelungselement am Hebel 10' vorgesehen. Insbesondere bevorzugt ist das Entriegelungselement verschließbar ausgebildet, so dass die verriegelte Stellung des Hebels 10' gesichert werden kann.

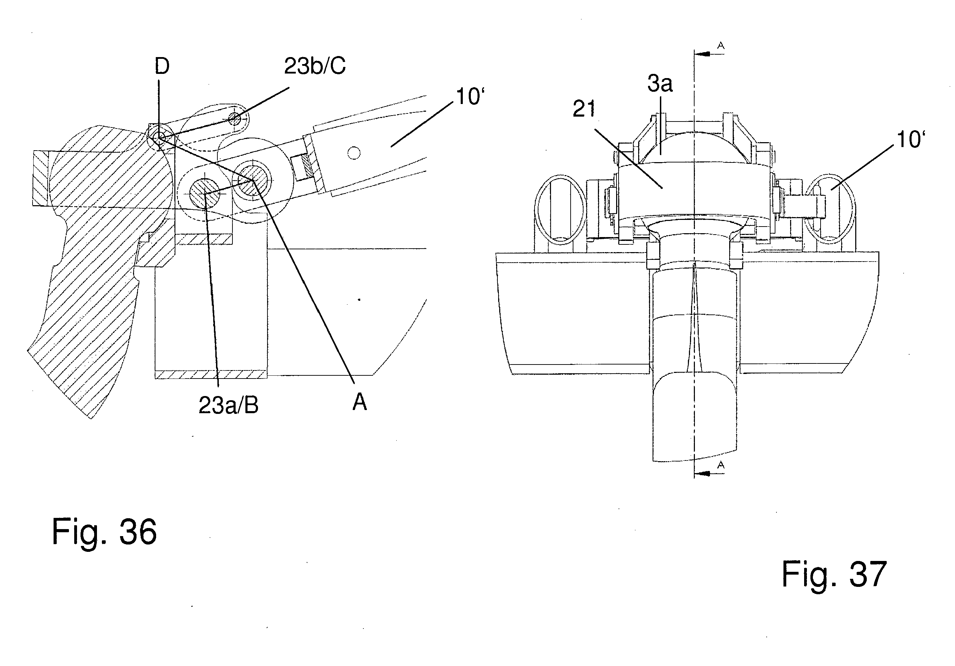

Zum Öffnen der Kupplungsvorrichtung 2 wird die Verriegelungsvorrichtung 65 gelöst, dann der Hebel 10' angehoben, so dass der ebenfalls freigegebene Spannbügel 21 entspannt (Fig. 36) und wieder über den Kopf 3a der Anhängerkupplung 3 geschwenkt wird, so dass der Lastenträger 1 von der Anhängerkupplung 3 abgenommen werden kann.

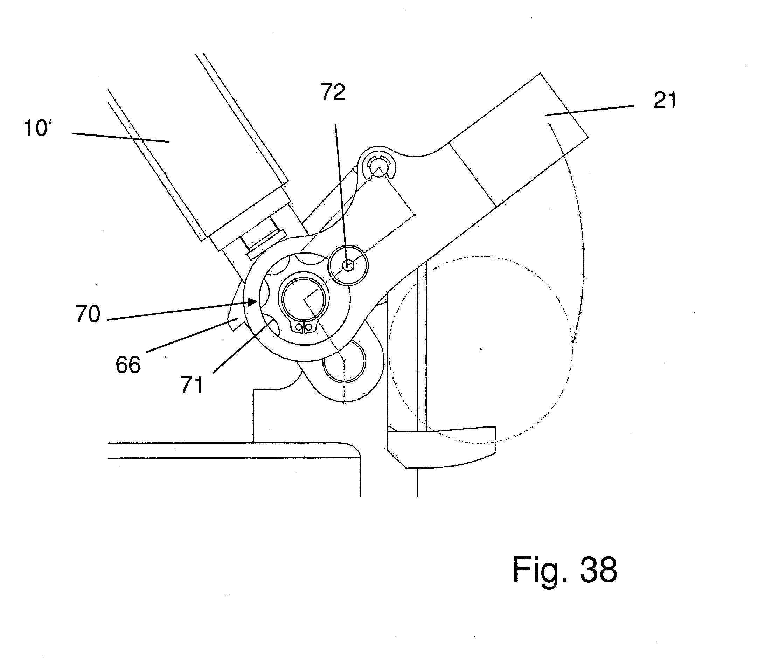

Zum manuellen Ausgleich möglicher Toleranzen, insbesondere in Bezug auf den Kugeldurchmesser des Kopfes 3a der Anhängerkupplung 3, ist gemäß dem zweiten Ausführungsbeispiel eine Ausgleichsanordnung 70 vorgesehen. Diese Ausgleichsanordnung 70 ist durch auf beiden Seiten des Spannbügels 21 vorgesehene Exzenterringe 71 in Verbindung mit Sicherungsschrauben 72, die mir ihrem Kopf in wellenförmig am Außenumfang der Exzenterringe 71 ausgebildete Rastöffnungen mit entsprechendem Krümmungsradius aufgenommen ist, gebildet, wie in Fig. 38 ersichtlich. Durch die hiermit verbundene Einstellbarkeit der Position der Enden des Spannbügels 21 können der Anlagepunkt K des Bügelbereichs des Spannbügels 21, welcher im Idealfall mittig in Bezug auf die Bügelbreite ist, und die hiermit in Zusammenhang stehende Spannkraft optimal eingestellt werden. Diese Ausgleichsanordnung entspricht somit in ihrer Funktion im Wesentlichen der automatischen Ausgleichsanordnung des ersten Ausführungsbeispiels.

## Patentansprüche

1. Kupplungsvorrichtung (2) für einen Lastenträger (1), welcher an einer Anhängerkupplung (3) mit einem im Wesentlichen kugelförmigen Kopf (3a) lösbar anbringbar ist, wobei die Kupplungsvorrichtung (2) auf die Anhängerkupplung (3) aufsetzbar ist, anschließend ein Spannbügel (21) über den Kopf (3a) der Anhängerkupplung (3) schwenkbar und mittels Spannens eines Spannbügels (21) fixierbar ist, **dadurch gekennzeichnet, dass** das Einschwenken und Spannen des Spannbügels (21) durch eine Schwenkbewegung eines einzigen als Bedienelement dienenden Hebels (10, 10') um eine Schwenkachse (S) erfolgt, und die Schwenkbewegung des Hebels (10, 10') durch ein Viergelenk (44) in die Schwenkbewegung des Spannbügels (21) bis zu einem Anlagepunkt (K) umgesetzt wird, und anschließend in die Spannbewegung des Spannbügels (21) umgesetzt wird.

2. Kupplungsvorrichtung nach Anspruch 1, **dadurch gekennzeichnet, dass** ein Teil des Viergelenks (44) zusammen mit dem Kopf (3a) der Anhängerkupplung (3) einen Kniehebel (A, B, K) bildet, der die Spannbewegung bewirkt.

3. Kupplungsvorrichtung nach Anspruch 2, **dadurch gekennzeichnet, dass** der Kniehebel durch einen Gelenkpunkt (A) im Endbereich des Spannbügels (21), in welchem ein Ende einer mit dem Hebel (10) verbundenen oder direkt durch den Hebel (10') gebildeten Kurbellasche (43) gelagert ist, einen Gelenkpunkt (B), in welchem die Schwenkachse (S) des Hebels (10, 10') stationär bezüglich eines Gegenlagers für den Kopf (3a) der Anhängerkupplung (3) gelagert ist, und einem Anlagepunkt (K), in welchem der Spannbügel (21) an den Kopf (3a) der Anhängerkupplung (3) anliegt, gebildet ist.

4. Kupplungsvorrichtung nach einem der vorhergehenden Ansprüche, **dadurch gekennzeichnet, dass** eine Ausgleichsanordnung für unterschiedliche Kugeldurchmesser des Kopfes (3a) der Anhängerkupplung (3) vorgesehen ist.

5. Kupplungsvorrichtung nach Anspruch 4, **dadurch gekennzeichnet, dass** die Ausgleichsvorrichtung einen automatischen Ausgleich vorsieht, wobei ein Teilbereich der Schwenkbewegung des Hebels (10) einen Ausgleich für unterschiedliche Kugeldurchmesser des Kopfes (3a) der Anhängerkupplung (3) vorsieht, und die gesamte Schwenkbewegung des Hebels (10) drei Teilbereiche aufweist, mit einem ersten Teilbereich, in welchem der Spannbügel (21) einschwenkt und in Anlage an den Kopf (3a) der Anhängerkupplung (3) gelangt, einen zweiten Teilbereich, in welchem der Ausgleich ohne wesentliches Spannen des Spannbügels (21) erfolgt, und einem drittem Teilbereich, in welchem die Spannbewegung des Spannbügels (21) erfolgt.

6. Kupplungsvorrichtung nach einem der vorhergehenden Ansprüche, **dadurch gekennzeichnet, dass** ein Übertragungselement (36) zur Übertragung der Schwenkbewegung vom Hebel (10) an den Spannbügel (21) vorgesehen ist, das Übertragungselement (36) mit einem Zahnsegment (32) formschlüssig verbunden ist, der Hebel (10) mit einer Klinke (31) verbunden ist, welche in Eingriff mit einem Zahnbereich (32a) des Zahnsegments (32) gelangen kann, wobei ein Federelement (34) zwischen Klinke (31) und Zahnsegment (32) angeordnet ist, welche im ersten Teilbereich der Schwenkbewegung das Zahnsegment (32) mit der Klinke (31) kraftschlüssig mitnimmt, und im zweiten Teilbereich der Schwenkbewegung einen Eingriff der Sperrzähne (31 a) in den Zahnbereich (32a) des Zahnsegments (32) ermöglicht.

7. Kupplungsvorrichtung nach Anspruch 6, **dadurch gekennzeichnet, dass** der Eingriff der Sperrzähne (31 a) durch eine Steuerplatte (35) im dritten Teilbereich der Schwenkbewegung des Hebels (10) verhindert wird.

8. Kupplungsvorrichtung nach Anspruch 6 oder 7, **dadurch gekennzeichnet, dass** das Übertragungselement (36) exzentrisch bezüglich der Schwenkachse (S) des Hebels (10) angeordnet ist.

9. Kupplungsvorrichtung nach Anspruch 4, **dadurch gekennzeichnet, dass** die Ausgleichsvorrichtung (70) einen manuellen Ausgleich durch einen Exzenterring (71) vorsieht.

10. Kupplungsvorrichtung nach einem der vorhergehenden Ansprüche, **dadurch gekennzeichnet, dass** der Hebel (10') verriegelbar ist.

## Claims

1. Coupling mechanism (2) for a load carrier (1), which can be detachably attached to a trailer hitch (3) with a substantially spherical head (3a), wherein the coupling mechanism (2) can be placed on the trailer hitch (3), afterwards a tensioning clamp (21) is pivotable over the head (3a) of the trailer hitch (3) and can be fixed by means of tensioning of a clamp (21), **characterised in that** the swinging-in and tensioning of the clamp (21) is done by a swinging movement of a single lever (10, 10'), serving as control element, around a pivoting axis (S), and the swinging movement of the lever (10, 10') is transformed by a four-joint (44) into the swinging movement of the clamp (21) up to a plant point (K), and afterwards it is transformed into the tensioning movement of the clamp (21).

2. Coupling mechanism according to claim 1, **characterised in that** a part of the four-joint (44) together with the head (3a) of the trailer hitch (3) forms an elbow lever (A, B, K) that entails the tensioning movement.

3. Coupling mechanism according to claim 2, **characterised in that** the elbow lever is formed by a fulcrum (A) in the end zone of the clamp (21), in which one end of a crank latch (43) is supported, connected with the lever (10) or formed directly by the lever (10'), by a fulcrum (B) in which the pivoting axis (S) of the lever (10, 10') is supported stationarily with respect to an abutment for the head (3a) of the trailer hitch (3), and by a contact point (K) in which the tensioning clamp (21) adheres to the head (3a) of the trailer hitch (3).

4. Coupling mechanism according to any of the preceding claims, **characterised in that** a compensation arrangement is provided for different ball diameters of the head (3a) of the trailer hitch (3).

5. Coupling mechanism according to claim 4, **characterised in that** the compensation device provides an automatic compensation, in which a partial zone of the swinging movement of the lever (10) provides a compensation for different ball diameters of the head (3a) of the trailer hitch (3), and the total swinging movement of the lever (10) presents three partial zones, with a first partial zone into which the tensioning clamp (21) swings in and adheres to the head (3a) of the trailer hitch (3), a second partial zone in which the compensation is done without substantial tensioning of the clamp (21), and a third partial zone in which the tensioning movement of the clamp (21) occurs.

6. Coupling mechanism according to any of the preceding claims, **characterised in that** a transmission element (36) is provided for the transmission of the swinging movement from the lever (10) to the tensioning clamp (21), that the transmission element (36) is positively connected to a tooth segment (32), that the lever (10) is connected with a detent (31) which can engage with a tooth area (32a) of the tooth segment (32), in which a spring element (34) is arranged between detent (31) and tooth segment (32), which in the first partial zone of the swinging movement entrains the tooth segment (32) with the detent (31) in force-locking manner, and which in the second partial zone of the swinging movement makes an engagement possible of the ratchet teeth (31a) in the tooth area (32a) of the tooth segment (32).

7. Coupling mechanism according to claim 6, **characterised in that** the engagement of the ratchet teeth (31a) is prevented by a control plate (35) in the third partial zone of the swinging movement of the lever (10).

8. Coupling mechanism according to claim 6 or 7, **characterised in that** the transmission element (36) is arranged eccentrically to the pivot axis (S) of the lever (10).

9. Coupling mechanism according to claim 4, **characterised in that** the compensation device (70) provides a manual compensation by an eccentric ring (71).

10. Coupling mechanism according to any of the preceding claims, **characterised in that** the lever (10') can be locked.

## Revendications

1. Dispositif de couplage (2) pour un porte-charge (1), qui peut être fixé de façon amovible à un dispositif d'attelage de remorque (3) avec une tête essentiellement sphérique (3a), où le dispositif de couplage (2) peut être placé sur le dispositif d'attelage de remorque (3), ensuite un étrier de serrage (21) est pivotable au-dessus de la tête (3a) du dispositif d'attelage de remorque (3), et peut être fixé par moyen de serrage d'un étrier (21), **caractérisé en ce que** le pivotement et le serrage de l'étrier (21) sont effectués par un mouvement de rotation d'un seul levier (10, 10'), servant d'élément de commande, autour d'un axe pivotant (S), et le mouvement de rotation du levier (10, 10') est transformé par un quadrilatère articulé (44) dans le mouvement de rotation de l'étrier de serrage (21) jusqu'à un point d'appui (K), et ensuite est transformé dans le mouvement de serrage de l'étrier de serrage (21).

2. Dispositif de couplage selon la revendication 1, **caractérisé en ce qu'**une partie du quadrilatère articulé (44) avec la tête (3a) du dispositif d'attelage de remorque (3) forme un levier articulé (A, B, K) qui entraîne le mouvement de serrage.

3. Dispositif de couplage selon la revendication 2, **caractérisé en ce que** le levier articulé est formé par un point d'articulation (A) dans la zone d'extrémité de l'étrier de serrage (21), dans lequel une extrémité d'un verrou de bielle (43) est appuyé, en relation avec le levier (10) ou formé directement par le levier (10'), par un point d'articulation (B), dans lequel l'axe pivotant (S) du levier (10, 10') est appuyé de façon stationnaire par rapport à une butée pour la tête (3a) du dispositif d'attelage de remorque (3), et par un point d'appui (K), dans lequel l'étrier de serrage (21) adhère à la tête (3a) du dispositif d'attelage de remorque (3).

4. Dispositif de couplage selon une des revendications précédentes, **caractérisé en ce qu'**un système de compensation est prévu pour différents diamètres de la sphère de la tête (3a) du dispositif d'attelage de remorque (3).

5. Dispositif de couplage selon la revendication 4, **caractérisé en ce que** le dispositif de compensation fournit une compensation automatique, où une section du mouvement de rotation du levier (10) fournit une compensation pour différents diamètres de la sphère de la tête (3a) du dispositif d'attelage de remorque (3), et le mouvement de rotation global du levier (10) présente trois sections, avec une première section, dans laquelle l'étrier de serrage (21) tire et parvient en appui à la tête (3a) du dispositif d'attelage de remorque (3), une seconde section dans laquelle la compensation a lieu sans serrage substantiel de l'étrier de serrage (21), et une troisième section dans laquelle a lieu le mouvement de serrage de l'étrier de serrage (21).

6. Dispositif de couplage selon une des revendications précédentes, **caractérisé en ce qu'**un élément de transmission (36) est prévu pour la transmission du mouvement de rotation du levier (10) à l'étrier de serrage (21), que l'élément de transmission (36) est lié à engagement positif à un segment denté (32), que le levier (10) est lié à un loquet (31), qui peut parvenir en engrènement avec une zone dentée (32a) du segment denté (32), où un élément à ressort (34) est arrangé entre le loquet (31) et le segment denté (32), lequel dans la première section du mouvement de rotation entraîne le segment denté (32) avec le loquet (31) en adhérence, et dans la seconde section du mouvement de rotation permet un engrènement des dents de blocage (31a) dans la zone dentée (32a) du segment denté (32).

7. Dispositif de couplage selon la revendication 6, **caractérisé en ce que** l'engrènement des dents de blocage (31a) est empêché par une plaque de commande (35) dans la troisième section du mouvement de rotation du levier (10).

8. Dispositif de couplage selon la revendication 6 ou 7, **caractérisé en ce que** l'élément de transmission (36) est disposé de façon excentrique par rapport à l'axe pivotant (S) du levier (10).

9. Dispositif de couplage selon la revendication 4, **caractérisé en ce que** le dispositif de compensation (70) prévoit une compensation manuelle par un anneau excentrique (71).

10. Dispositif de couplage selon une des revendications précédentes, **caractérisé en ce que** le levier (10') peut être verrouillé.
